# EUROPEAN PATENT APPLICATION

(11) **EP 2 642 443 A1**
(43) Date of publication of application: **25.09.2013**
(21) Application number: 11840950.7
(22) Date of filing: 03.10.2011
(51) Int. Cl.: G06Q 30/02, G06F 13/00, G06F 17/30, G09F 19/00

(54) **ADVERTISEMENT DISTRIBUTION SYSTEM**

(30) Priority: 15.11.2010 JP 2010255266
(71) Applicant: Sharp Kabushiki Kaisha, Osaka-shi, Osaka 545-8522 (JP)
(72) Inventor: WATANABE, Kenji, Osaka-shi, Osaka 545-8522 (JP); TOJIMA, Akira, Osaka-shi, Osaka 545-8522 (JP)
(74) Representative: Müller - Hoffmann & Partner
(86) International application number: PCT/JP2011/072755
(87) International publication number: WO 2012/066861

(57) **Abstract**

A terminal communicating with a server (100) includes an output unit (6) for outputting information received through a communication line, an information accepting unit for accepting information related to the terminal, and an advertisement request unit (7) for transmitting an advertisement request including the information related to the terminal to the server. The server includes an advertisement storage unit (102) for storing beforehand advertisement information and information corresponding to each advertisement information that is related to a terminal as a distribution target of the advertisement information. The information related to the terminal indicates market information that designates a sales channel of the terminal. The server reads out the advertisement information corresponding to the information related to the terminal in the received advertisement request from the advertisement storage unit and transmits the read advertisement information to the terminal.

## Description

### TECHNICAL FIELD

The present invention relates to an advertisement distribution system, and more specifically to an advertisement distribution system that distributes an advertisement from a server to a terminal.

### BACKGROUND ART

A method of distributing advertisements via communication is proposed, for example, by Japanese Patent Laying-Open No. 2002-91995 (Patent Document 1). According to the method in Japanese Patent Laying-Open No. 2002-91995 (Patent Document 1), an advertisement is distributed separately from a Web content body in order to provide display advertisements different among users. Accordingly, even when the same Web content is presented, advertisements that vary among users can be displayed.

### CITATION LIST

### PATENT DOCUMENT

PTD 1: Japanese Patent Laying-Open No. 2002-91995

### SUMMARY OF INVENTION

### TECHNICAL PROBLEM

The method in Japanese Patent Laying-Open No. 2002-91995 (Patent Document 1) refers to information such as location (country, region), language, character, gender, age, occupation, family, and terminal, and medium representing ability (still images, motion images, graphics, animation, etc.) of external equipment connected to the terminal in order to determine an advertisement suitable for a user.

However, information of a company that sells a terminal is not adopted as reference information for the determination. As a result, an advertisement of a competitor of the company that sells the terminal may be displayed on the terminal. In this case, the seller company of the terminal loses customers to the competitor and cannot achieve advertising effectiveness.

An object of the present invention is therefore to provide a system that distributes advertisements so as to achieve effects of advertising.

### SOLUTION TO PROBLEM

According to an aspect of the present invention, an advertisement distribution system includes a server distributing advertisement information and a terminal communicating with the server through a communication line. The terminal includes an output unit for outputting information received through the communication line, an information accepting unit for accepting information related to the terminal, and an advertisement request unit for transmitting an advertisement request including the information related to the terminal to the server.

The server includes an advertisement storage unit for storing beforehand a plurality of advertisement information and information corresponding to each advertisement information that is related to a terminal as a distribution target of the advertisement information. The information related to the terminal indicates market information that designates a sales channel of the terminal. The server reads out the advertisement information corresponding to the information related to the terminal in the received advertisement request from the advertisement storage unit and transmits the read advertisement information to the terminal.

Preferably, the market information corresponds to part of identification information of a user of the terminal.

Preferably, each advertisement information in the advertisement storage unit includes distribution period information that refers to a period during which the advertisement information is to be distributed. The server determines whether to transmit the advertisement information to the terminal, based on the distribution period information of the advertisement information read out from the advertisement storage unit.

Preferably, the advertisement information includes specification information that specifies an advertisement image. The terminal includes an acquisition request transmission unit transmitting an advertisement image acquisition request including the specification information to the server. The terminal receives, from the server, an advertisement image specified by the specification information included in the advertisement image acquisition request transmitted by the acquisition request transmission unit, and stores the received advertisement image into a storage unit.

Preferably, when the received advertisement image agrees with an advertisement image already stored in the storage unit, the terminal discards the received advertisement image.

### ADVANTAGEOUS EFFECTS OF INVENTION

The present invention can achieve effects of advertising using advertisement information distributed to a terminal.

### BRIEF DESCRIPTION OF DRAWINGS

Fig. 1 is a schematic block diagram of an advertisement distribution system according to an embodiment of the present invention.
Fig. 2 is a functional configuration diagram of a terminal and a server according to an embodiment of the present invention.
Fig. 3 is an external view of the terminal according to an embodiment of the present invention.
Fig. 4 is a diagram for explaining transition of screens according to an embodiment of the present invention.
Fig. 5 is a sequence diagram illustrating an overall operation according to an embodiment of the present invention.
Fig. 6 is a diagram illustrating information exchanged during communication between the terminal and the server according to an embodiment of the present invention.
Fig. 7 is a diagram illustrating information exchanged during communication between the terminal and the server according to an embodiment of the present invention.
Fig. 8 is a diagram illustrating attributes of a campaign according to an embodiment of the present invention.
Fig. 9 is a diagram illustrating an advertisement space management DB according to an embodiment of the present invention.
Fig. 10 is a diagram illustrating a creative management DB according to an embodiment of the present invention.
Fig. 11 is a diagram showing an example of a user information DB according to an embodiment of the present invention.
Fig. 12 is a main flowchart according to an embodiment of the present invention.
Fig. 13 is a main flowchart according to an embodiment of the present invention.
Fig. 14 is a flowchart of an application launcher screen process according to an embodiment of the present invention.
Fig. 15 is a flowchart of a display advertisement selecting process according to an embodiment of the present invention.
Fig. 16 is a diagram for explaining advertisement display control according to an embodiment of the present invention.
Fig. 17 is a diagram for explaining advertisement display control according to an embodiment of the present invention.
Fig. 18 is a diagram for explaining advertisement display control according to an embodiment of the present invention.
Fig. 19 is a flowchart of an advertisement list screen process according to an embodiment of the present invention.
Fig. 20 is a flowchart of an advertisement bookmark app startup process according to an embodiment of the present invention.
Fig. 21 is a flowchart of an advertisement bookmark registration process according to an embodiment of the present invention.
Fig. 22 is a flowchart of an advertisement data acquisition process according to an embodiment of the present invention.
Fig. 23 is a sub-flowchart of the advertisement data acquisition process according to an embodiment of the present invention.
Fig. 24 is a diagram illustrating status data according to an embodiment of the present invention.
Fig. 25 is a configuration diagram of a PC (Personal Computer) according to an embodiment of the present invention.

### DESCRIPTION OF EMBODIMENTS

An embodiment of the present invention will be described in details below with reference to the figures.

In the present embodiment, an advertisement distributed is assumed to be displayed on a screen of an application launcher that runs on an e-book (electronic book) reader terminal, although not being limited thereto.

In the present embodiment, the following terms are used.

"Market" refers to a sales channel of a terminal receiving a distributed advertisement. For example, assuming that the terminal is a mobile phone terminal, the mobile phone is sold for each company that provides communication service. If the terminal is an e-book reader terminal for viewing an e-book, the market refers to a seller company of the e-book reader terminal. The market here therefore corresponds to such a company. "Market ID" refers to information for identifying a market.

"Creative" refers to a content for representing an advertisement, for example, an entity of an advertisement such as images including still images and motion images, characters, and sound. Here, it is assumed that the creative is an image, for the sake of brevity. "Creative ID" refers to information for uniquely identifying or specifying the creative. In the present embodiment, a creative or creative image is used.

"Campaign" refers to a group of one or more creatives.

"Advertisement space" refers to a display region on a screen in which one or more campaigns are displayed, and "advertisement space ID" refers to an identifier (coordinate values on the screen) for uniquely identifying the region. One or more campaigns are associated with one advertisement space.

"Online" refers to a state in which a terminal can communicate through a communication line established with an external device, and "offline" refers to a state in which the communication line is disconnected and the terminal cannot communicate.

"Advertisement bookmark" refers to a creative (advertisement) that is registered by the user in the terminal as a favorite or an interesting creative.

### <System Configuration>

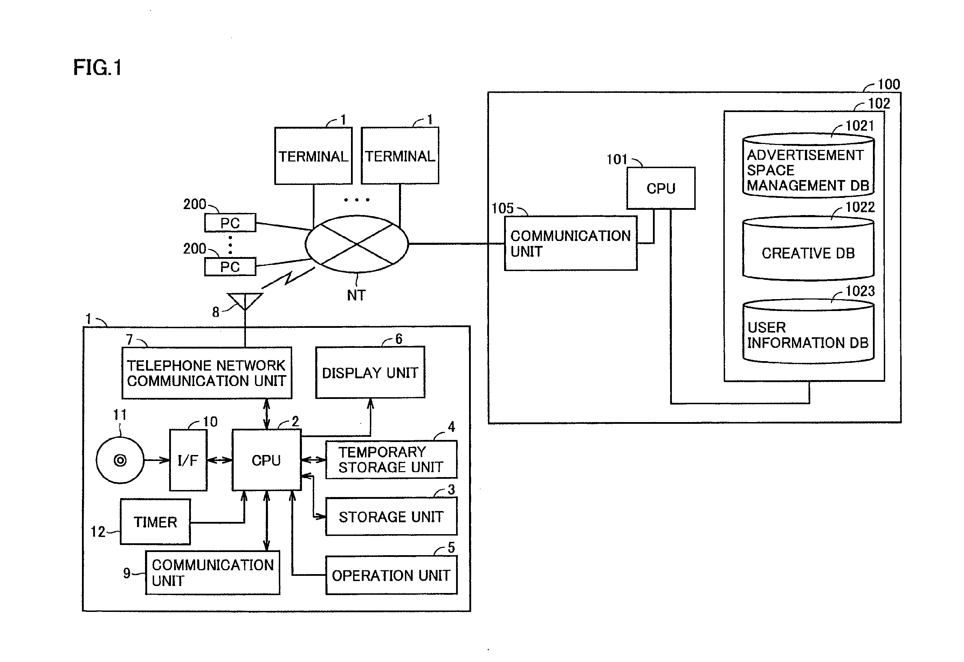

Referring to Fig. 1, an advertisement distribution system according to the present embodiment includes a server 100 that distributes advertisements and a plurality of information processing terminals that communicate with server 100 through a communication network NT. Communication network NT includes a variety of networks including the Internet. A plurality of information processing terminals include a portable terminal 1 and a PC (Personal Computer) 200 fixedly installed. Information related to an advertisement including a creative (called advertisement information) is distributed from server 100 to each terminal 1 and each PC 200. Here, terminal 1 is illustrated as an information processing terminal to which advertisement information is distributed from server 100, for the sake of brevity. PC 200 also has a function of processing the distributed advertisement information in a similar manner as in terminal 1.

Server 100 includes a CPU (Central Processing Unit) 101, a storage unit 102, a not-shown transitory storage unit, and a communication unit 105 for communicating with an external device through communication network NT.

Storage unit 102 includes a variety of storage devices such as a hard disk, a ROM (Read Only Memory), and a RAM (Random Access Memory). An advertisement space management DB (abbreviation of database) 1021, a creative DB 1022, and a user information DB 1023 are stored in storage unit 102.

Each terminal 1 has the same configuration. Terminal 1 includes a CPU 2, a storage unit 3 including a non-transitory memory for storing programs and data, a temporary storage unit 4 used as a working area and a transitory storage area of data, an operation unit 5 operated by the user to input information, a display unit 6 for displaying information, a telephone network communication unit 7 connecting an antenna 8, a communication unit 9, an I/F (interface) 10 having a memory card 11 as a card-like storage medium removably attached thereto for accessing data in the attached memory card 11, and a timer 12 for measuring time.

Terminal 1 here includes a telephone function but may be a portable terminal not having a telephone function (for example, a PDA (Personal Digital Assistant) having a connection function to communication network NT or an e-book viewer terminal having a connection function to communication network NT).

Communication unit 9 connects to the Internet, for example, via a wireless LAN (Local Area Network) in accordance with standards such as IEEE (Institute of Electrical and Electronic Engineers) 802.11a/b/g/n, or a wired LAN. Telephone network communication unit 7 of terminal 1 connects to the Internet via a mobile telephone network.

Operation unit 5 has a function for accepting information input operation by the user and includes, for example, buttons, keys, a trackball, and a touch panel.

### <Functional Configuration of Terminal>

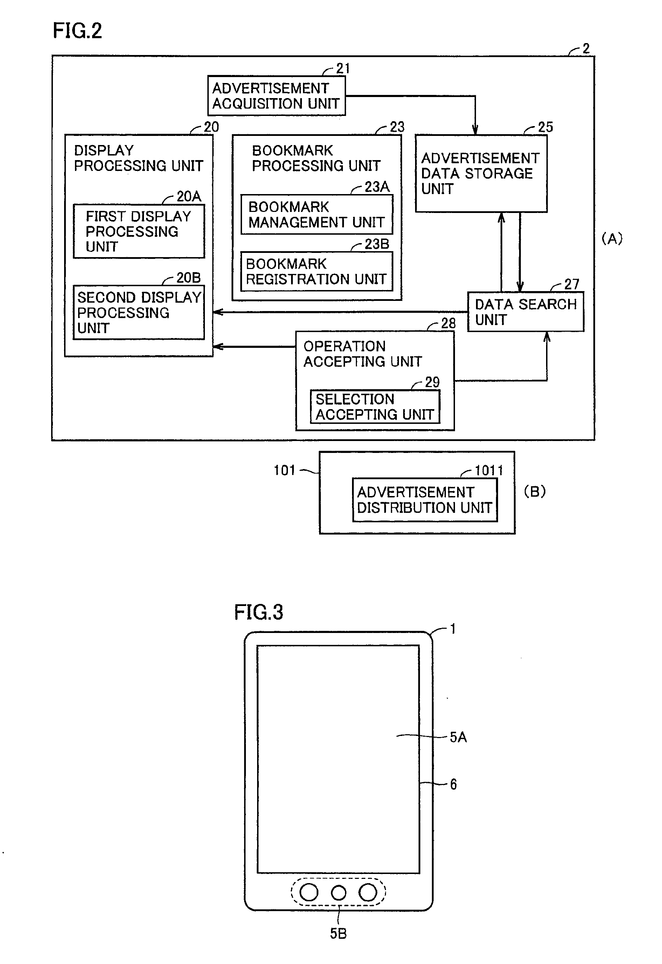

Referring to Fig. 2, part of the functions of terminal 1 is described. Referring to Fig. 2 (A), CPU 2 of terminal 1 includes a display processing unit 20 for displaying information using display unit 6, an advertisement acquisition unit 21 for acquiring advertisement information from server 100 through communication network NT, a bookmark processing unit 23, an advertisement data storage unit 25 for storing the acquired advertisement information, a data search unit 27 for searching data in advertisement data storage unit 25, and an operation accepting unit 28.

Operation accepting unit 28 accepts user's operation through operation unit 5 and outputs an instruction based on the accepted operation. Operation accepting unit 28 includes a selection accepting unit 29. Selection accepting unit 29 accepts user's selecting operation such as a tap and a long tap through operation unit 5 and outputs an instruction based on the accepted operation. Advertisement data storage unit 25 corresponds to part of storage unit 3.

Display processing unit 20 displays information on display unit 6 based on an instruction from operation accepting unit 28. Display processing unit 20 includes a first display processing unit 20A and a second display processing unit 20B. First display processing unit 20A displays predetermined advertisement information stored in advertisement data storage unit 25 on display unit 6. Second display processing unit 20B displays a list of advertisement information retrieved from advertisement data storage unit 25 on display unit 6 in accordance with the operation accepted by selection accepting unit 29.

Display processing unit 20 also has a Web (abbreviation of World Wide Web) browsing function (hereinafter called browser) and an e-book viewer function for viewing an e-book.

The browser has a function of acquiring information of a predetermined site designated by an URL (Uniform Resource Locator) via commination network NT based on the URL and displaying the acquired information on display unit 6.

The e-book viewer function displays data of an e-book content stored in storage unit 3 on display unit 6 to allow the user to view it. In this case, the user can turn pages to view using operation unit 5.

For processing an advertisement bookmark, bookmark processing unit 23 has a bookmark management unit 23A for managing an advertisement bookmark in terminal 1 and a bookmark registration unit 23B for registering an advertisement bookmark.

CPU 2 of terminal 1 has a functional unit (not shown) that detects whether the status of terminal 1 is online in which a communication line is established with another device including server 100 via communication network NT to enable communication, or offline in which a communication line is cut off to disable communication. Whether online or offline is detected based on a response from an external device including server 100 to a signal output to the outside by telephone network communication unit 7 or communication unit 9.

It is assumed that these functional units of CPU 2 are modules implemented by CPU 2 executing programs stored in storage unit 3. These functional units are not limited to modules but may be configured with a microcomputer including CPU 2, a microcontroller, or hardware circuitry, or may be configured with a combination of modules and hardware circuitry.

Referring to Fig. 2(B), CPU 101 of server 100 has an advertisement distribution unit 1011 for distributing advertisement information to terminal 1 through communication unit 105. It is assumed that advertisement distribution unit 1011 is a module implemented by CPU 101 executing a program stored in storage unit 102. Advertisement distribution unit 1011 is not limited to a module but may be configured with a microcomputer including CPU 101, a microcontroller, or hardware circuitry, or may be configured with a combination of a module and hardware circuitry.

### <External View of Terminal>

Referring to Fig. 3, terminal 1 includes a touch panel input device 5A and a key/trackball unit 5B that can be externally operated by the user. Touch panel input device 5A integrally includes operation unit 5 and display unit 6. Touch panel input device 5A detects an operation position on the screen of display unit 6 and inputs information based on the detected position or determines the kind of operation. Here, the kinds of operation are "tap" and "long tap," by way of example. "Tap" refers to an operation of quickly touching the surface of the screen of display unit 6 with a finger and lifting the finger. "Long tap" refers to an operation of touching the surface of the screen with a finger for a certain period of time and lifting the finger. The kinds of operation are not limited thereto and may be, for example, drag operation (operation of sliding a finger while touching) or flick operation (an operation of swiftly sliding a finger in a predetermined direction while touching).

### <Transition of Display Screens>

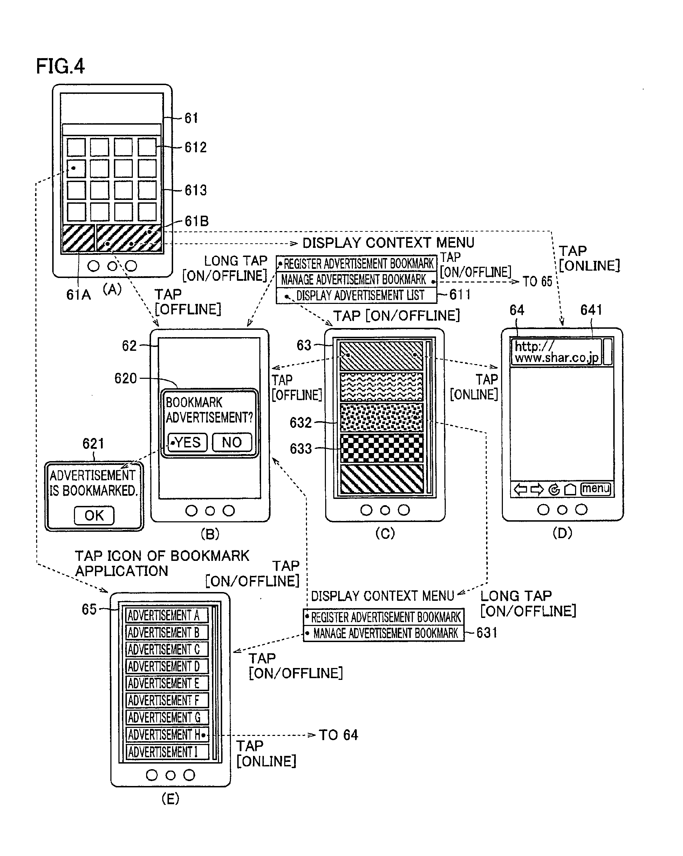

Referring to Fig. 4, transition of screens appearing on display unit 6 is described. Display processing unit 20 switches display screens on display unit 6 in accordance with an instruction from operation accepting unit 28.

Fig. 4(A) shows a screen 61 that appears on startup of an application launcher. Screen 61 is an application launcher screen 613 in which a plurality of icons 612 are arranged and advertisement spaces 61A and 61B are displayed. Each icon 612 corresponds to an application of terminal 1 and includes a picture representing the corresponding application. A variety of application programs including the application launcher are stored beforehand in storage unit 3. When the user taps icon 612, CPU 2 starts up an application corresponding to the tapped icon 612. "Startup" refers to that CPU 2 reads out an application program from storage unit 3 to cause the read application program to transit to an executable state or start execution.

An advertisement that meets a condition such as a market of terminal 1 is displayed in advertisement space 61A. An advertisement selected in accordance with a prescribed rule is displayed in advertisement space 61B on startup of the application launcher.

When a portion in advertisement space 61B is tapped offline, the screen of display unit 6 switches from screen 61 to a screen 62 in Fig. 4(B). When a portion in advertisement space 61B is long-tapped offline or online, a context menu 611 appears in advertisement space 61B. When a portion in advertisement space 61B is tapped online, screen 61 switches to a screen 64 in Fig. 4(D).

Context menu 611 includes three items, namely, "Register advertisement bookmark," "Manage advertisement bookmark," and "Display advertisement list." When the item of context menu 611 is tapped either online or offline, the screen transits to the next level. Specifically, when "Register advertisement bookmark" is tapped, screen 61 switches to screen 62 in Fig. 4(B). When "Manage advertisement bookmark" is tapped, screen 61 switches to a screen 65 in Fig. 4(E). When "Display advertisement list" is tapped, screen 61 switches to a screen 63 in Fig. 4(C).

On screen 62, a dialog 620 appears to ask whether to bookmark the advertisement displayed in advertisement space 61B. On dialog 620, if the user wishes to bookmark and selects "yes," a window including a message 621 appears on screen 62 to indicate that the advertisement in advertisement space 61B is bookmarked.

When "Manage advertisement bookmark" of context menu 611 is tapped, screen 61 switches to screen 65 in Fig. 4(E). Screen 65 displays a list of advertisement names registered as bookmarks that are stored in advertisement data storage unit 25. That is, the list displays an "advertisement name" included in data D81 of each creative registered as a bookmark by "Register advertisement bookmark."

When "Display advertisement list" of context menu 611 is tapped, screen 61 switches to screen 63 in Fig. 4(C). Screen 63 includes an advertisement list 632. Advertisement list 632 displays a list of different kinds of advertisements 633. When the user taps a desired advertisement 633 from among advertisements 633 in advertisement list 632, screen 63 switches to screen 64 in Fig. 4(D) online or switches to screen 62 in Fig. 4(B) offline, depending on the tapped position.

Screen 64 in Fig. 4(D) refers to a screen displayed by the browser based on an URL 641 associated with the tapped advertisement.

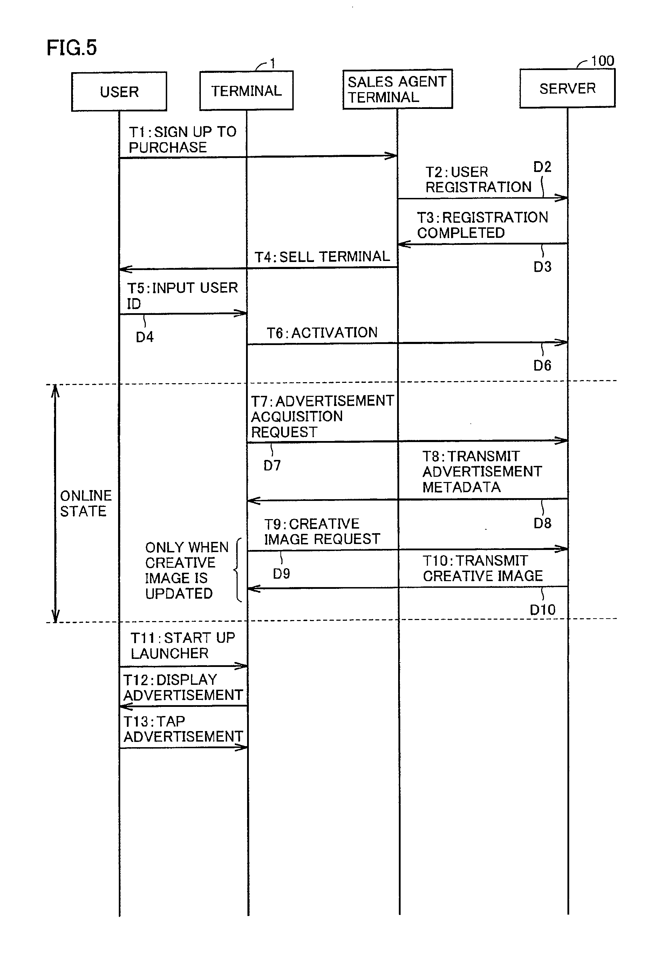

When advertisement 633 on screen 63 is long-tapped either online or offline, context menu 631 superimposed on advertisement 633 appears on display unit 6. Context menu 631 includes items "Register advertisement bookmark" and "Manage advertisement bookmark". When the item "Register advertisement bookmark" is tapped, screen 63 switches to screen 62 of dialog 620 in Fig. 4(B). When the item "Manage advertisement bookmark" is tapped, screen 63 switches to screen 65 in Fig. 5(E).

When a desired advertisement name is tapped online in a list of advertisement names on screen 65 in Fig. 4(E), screen 65 switches to screen 64 in Fig. 4(D) displayed by the browser based on the URL associated with the desired advertisement name.

### <Operation Sequence>

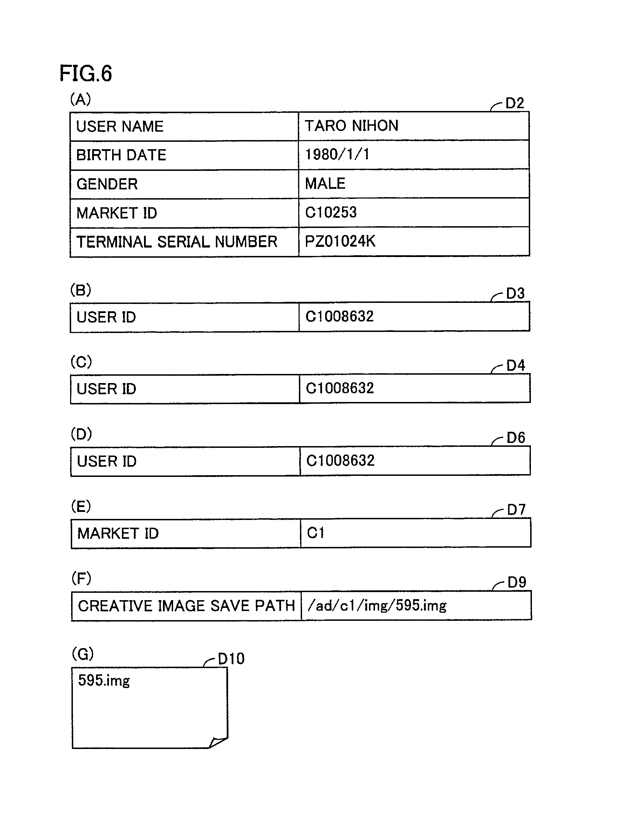

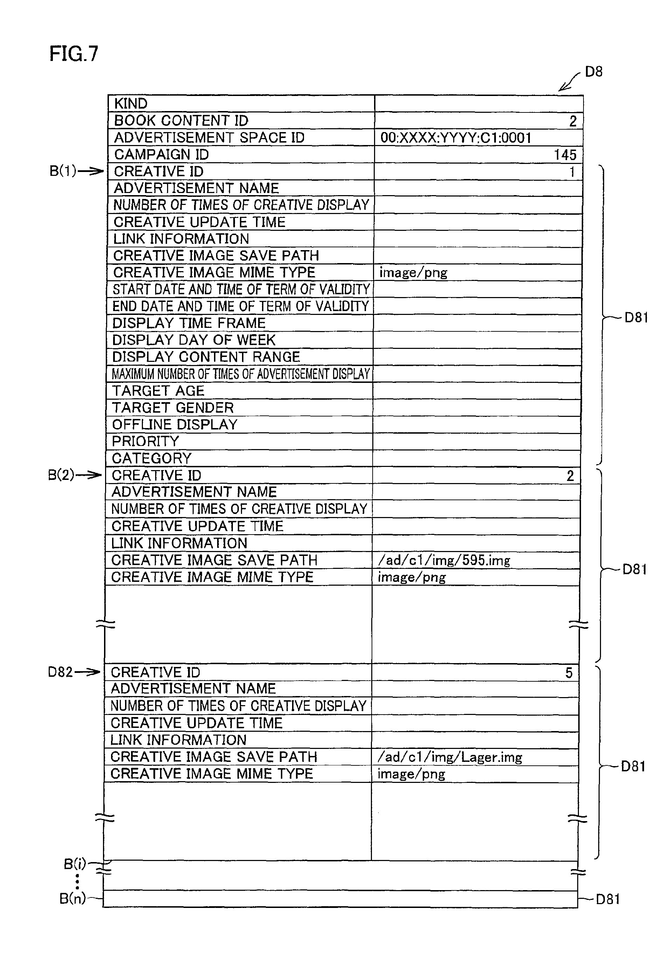

Referring to Fig. 5 to Fig. 7, an operation sequence according to the present embodiment is described. Figs. 6 and 7 illustrate data to be handled in the sequence in Fig. 5.

First, a user signs up to purchase terminal 1 with a sales agent (step T1). The sales agent communicates with server 100 through an in-store input terminal and requests server 100 for new registration of registration information D2 (see Fig. 6(A)). CPU 101 of server 100 then receives registration information D2, stores the received registration information D2 into user information DB 1023 (step T2), and transmits registration completed information D3 (see Fig. 6(B)) to the requestor (step T3). Registration completed information D3 is a user ID for identifying the user. The clerk at the sales agent lets the user know the user ID received from server 100 and sells terminal 1 to the user (step T4). The user stores the known user ID (see data D4 in Fig. 6(C)) into storage unit 3 of terminal 1 that the user purchased, through operation unit 5 (step T5).

The user operates terminal 1 online to transmit activation D6 (a procedure request for validating the user ID) in Fig. 6(D) to server 100 (step T6). Activation D6 is transmitted online.

After that, for example, at a timing of switching from offline to online or when the time measured by timer 12 indicates a predetermined time online, terminal 1 transmits an advertisement acquisition request D7 in Fig. 6(E) to server 100 (step T7).

Upon receiving the advertisement acquisition request, server 100 transmits advertisement metadata D8 in Fig. 7 to terminal 1 (step T8). If advertisement metadata D8 is received for the first time after purchase of terminal 1, a plurality of creative images designated by advertisement metadata D8 are also transmitted from server 100 to terminal 1. Terminal 1 stores each received creative image into a predetermined area of storage unit 3. For each creative, information that designates the area in which the creative is stored (for example, address information of storage unit 3) is registered as "creative image save path" corresponding to each creative in advertisement metadata D8.

Terminal 1 thereafter refers to advertisement metadata D8 newly received to determine whether there exists an updated creative image. If it is determined that there exists an updated creative image, terminal 1 transmits a creative image request D9 in Fig. 6(F) to server 100 (step T9). Server 100 transmits the requested creative image D10 (see Fig. 6(G)) to terminal 1 (step T10). Terminal 1 receives the updated creative image D10 and stores the updated creative image D10 into storage unit 3. This processing is repeated for each updated creative image.

The user operates operation unit 5 of terminal 1 to start up the application launcher (step T11). Screen 61 in Fig. 4(A) then appears on display unit 6 (step T12). When the user operates (for example, taps) screen 61 (step T13), the screen switches in accordance with the operation.

User registration information D2 in Fig. 6(A) includes the user's name, birth date and gender, a market ID, and a terminal serial number.

Registration completed information D3 in Fig. 6(B) refers to the user ID allocated by server 100 for identifying the user whose registration information D2 has been stored in user information DB 1023. Data D4 and activation data D6 in Fig. 6(C) and (D) refer to the user ID.

Advertisement acquisition request D7 in Fig. 6(E) refers to a market ID. This market ID is represented by the upper two digits of the user ID.

Creative image request D9 in Fig. 6(F) is represented by data (described later) of the creative image save path of advertisement metadata D8 (Fig. 7).

On screen 61, advertisement spaces 61A and 61B are displayed at the lower portion of the screen. However, the display position thereof may be any position other than the lower portion. If the creative in advertisement space 61B is tapped offline, terminal 1 may display an image different from an advertisement. If there is no creative to be displayed in advertisement space 61A, 61B, the advertisement space may not be displayed per se or an alternative image may be displayed.

When "yes" is selected in dialog 620 for confirming the advertisement bookmark registration, and the creative is registered as a bookmark, the invoking screen 63 may thereafter be displayed. If a "Display advertisement bookmark" button is provided in dialog 620 and the button is selected, the screen may transit to screen 65 of advertisement bookmarks.

Display control as follows may be performed on screen 63 displaying advertisement list 632. When online, screen 63 of advertisement list 632 may appear directly from screen 61 while bypassing context menu 611. The order in which creatives are arranged in advertisement list 632 can be specified by the user (for example, the arrangement order may be specified, for example, by the order of the expiry date of advertisement, the number of times creative is tapped, or the update date of creative).

When a creative in advertisement list 632 is registered as an advertisement bookmark, the creative may be removed from display in advertisement list 632. When a creative registered as an advertisement bookmark is displayed in advertisement list 632, it may be displayed in such a manner that it has already been bookmarked.

When offline, the tapped creative in advertisement list 632 may be displayed in a manner to indicate as such. In this case, when going online, information acquired in accordance with link information (URL) of data D81 corresponding to the creative may be presented using a popup or an icon. The popup refers to that the browser automatically opens a new window on the screen and displays information in that window.

### <Advertisement Metadata>

In each advertisement space (advertisement space 61 A, 6 1 B on screen 61) displayed on display unit 6, terminal 1 displays data of one or more campaigns associated with the advertisement space. Data of each campaign is represented by advertisement metadata D8 in Fig. 7.

Referring to Fig. 7, advertisement metadata D8 includes a kind, a book content ID for identifying a book content, an advertisement space ID, a campaign ID, and one or more data D81.

The "kind" refers to the kind of an application with which "advertisement space" is displayed. For example, as shown in Fig. 4, the advertisement space is displayed on a screen appearing when an "application launcher" (which is a kind of application) is started up. In the present embodiment, therefore, the kind refers to an "application launcher." The advertisement space may be displayed on a display screen on startup of another application. In the present embodiment, however, it is assumed that the "kind" in advertisement metadata D8 received by terminal 1 refers to an "application launcher," for the sake of brevity.

CPU 2 can determine whether to display an advertisement space on startup of any one of applications, based on the kind in advertisement metadata D8 received from server 100. An advertisement space may be displayed in a region (a coordinate position on the screen) based on the advertisement space ID.

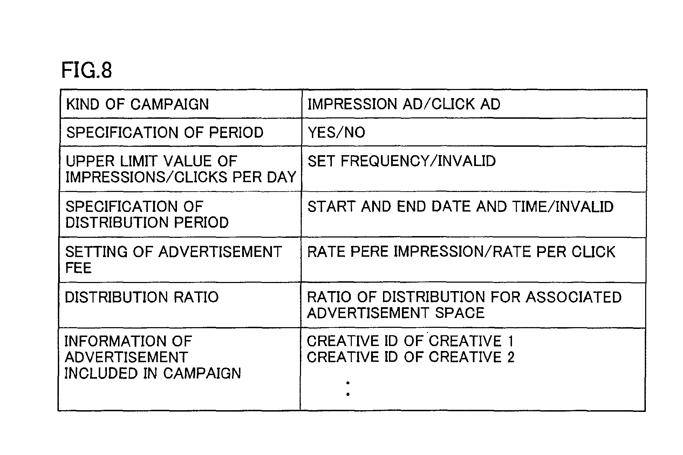

Fig. 8 shows the details of "campaign ID." Referring to Fig. 8, the campaign ID includes the kind of campaign, specification of period, the upper limit value of impressions/clicks per day, specification of distribution period, setting of advertisement fee, distribution ratio, and information of creatives included in the campaign.

Each data D81 represents data of each creative included in the campaign. The details of data D81 will be described later.

### <Description of Database on Server Side>

In the present embodiment, server 100 prepares one or more advertisement metadata D8 configured with a set of an e-book content and one or more advertisement space IDs and one or more creative IDs corresponding to the e-book content ID using a database. No identical combination exists.

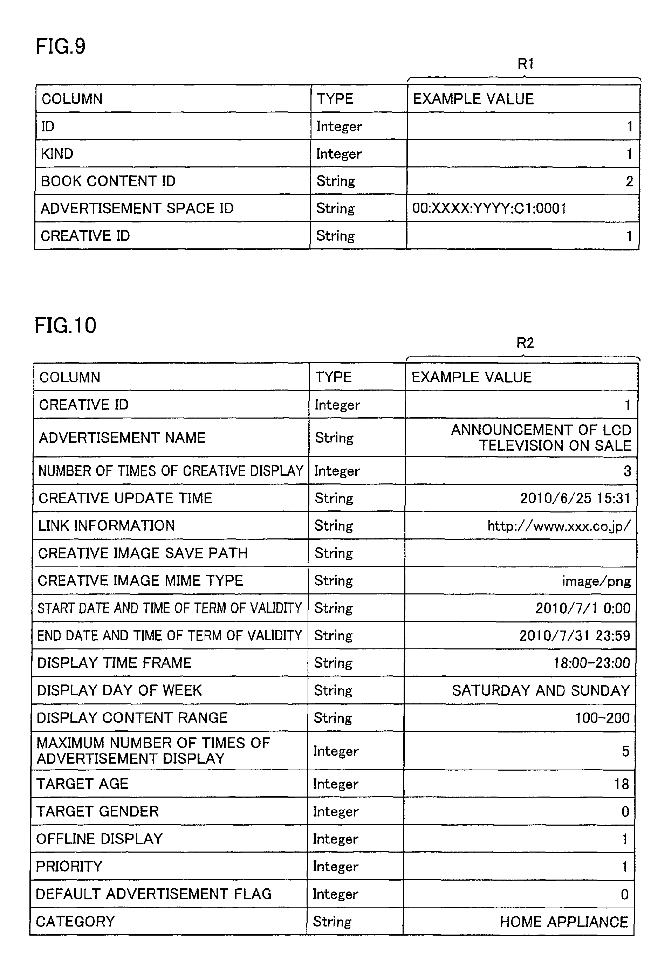

Fig. 9 shows a record R1 of advertisement space management DB 1021 by way of example. Advertisement space management DB 1021 has a plurality of records R1, and record R1 includes values shown on the right end in Fig. 9 as examples. Each record R1 corresponds to the set as described above. In Fig. 9, "column" and "type" are shown to explain record R1. More specifically, record R1 includes values corresponding to different kinds of data designated by "column," and those values are represented by "type" (integer, string, etc.).

Referring to Fig. 9, record R1 includes values of an ID for identifying the record R1, the kind of the corresponding set, a book content ID, an advertisement space ID, and an ID of a creative displayed in the advertisement space.

Fig. 10 shows a record R2 corresponding to each creative in creative DB 1022 by way of example. Creative DB 1022 has a plurality of records R2, and record R2 includes values shown on the right end in Fig. 10 as examples. In each record R2, "column" and "type" are shown to explain the record R2. More specifically, record R2 includes values corresponding to different kinds of data designated by "column," and those values are represented by corresponding types (integer, string, etc.).

Referring to Fig. 10, record R2 includes values of the ID of the corresponding creative, the advertisement name of the creative, the number of times the creative is displayed on terminal 1, the latest update time of the creative, the URL of information associated (linked) with the creative that is displayed when the creative is tapped, the creative image save path that is the storage location (address information) of the creative image, the type of creative image data, the term of validity (the display start date and end date) of the creative, a time frame and a day of the week during which the creative is to be displayed, a display content range (page range, for example), the maximum number of times the advertisement is displayed, the minimum age and gender of a target user eligible for display of the creative, data specifying whether to display the creative when online, the priority of display order of the creative, a flag specifying whether the creative is displayed by default, and a product category (for example, electrical appliance, food, etc.) to which the advertisement of the creative belongs.

Server 100 generates advertisement metadata D8 from information of advertisement space management DB 1021 and creative DB 1022 based on a predetermined combination as described above and transmits the generated advertisement metadata D8 to the requestor terminal 1. The predetermined combination is determined based on the value of "creative ID" of advertisement space management DB 1021 and the value of "creative ID" of creative DB 1022. In other words, data of each creative management DB having the "creative ID" having a value that matches the value of the "creative ID" of advertisement space management DB 1021 serves as data 81 to generate advertisement metadata D8.

Referring to Fig. 7, each data D81 of advertisement metadata D8 includes values corresponding to various data of record R2 of creative DB 1022 described above.

In this manner, server 100 and terminal 1 have creative DB 1022 and advertisement metadata D8, respectively, as databases having the same structure. Server 100 uses creative DB 1022 for managing information of each creative to be distributed, and terminal 1 uses advertisement metadata D8 for managing information of each distributed creative.

Accordingly, the "creative image save path" refers to the storage location (address information) of a creative image in terminal 1 in advertisement metadata D8 and refers to the storage location (address information) of a creative image in server 100 in creative management DB 102. Display processing unit 20 of terminal 1 increments the "number of times of creative display" of advertisement metadata D8 by one every time the creative image is displayed. The number of times the creative image is displayed in terminal 1 can thus be counted.

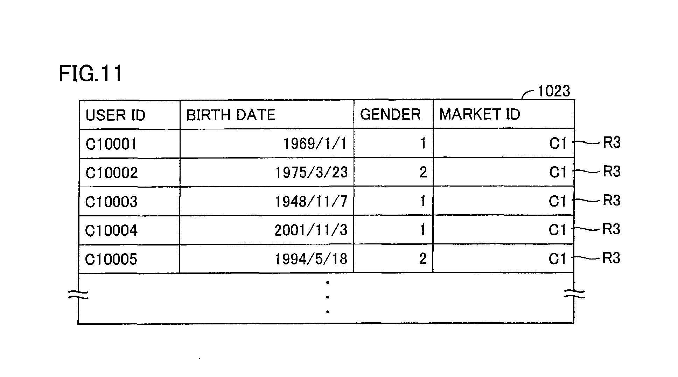

Fig. 11 shows user information DB 1023. User information DB 1023 stores a record R3 based on registration information D2, corresponding to each user registered in server 100 through user registration (step T5) in Fig. 5. The user ID, birth date, gender, and market ID are stored in record R3.

Server 100 searches user information DB 1023 based on the user ID received from terminal 1 and reads out the birth date and gender of the user corresponding to the user ID. Creative DB 1022 is searched based on the age and gender of the user in accordance with the read birth date. Based on the search result, among records R2 storing the values of "target age" and "target gender" that match the age and gender, advertisement information that indicates within the term of validity is distributed.

In the present embodiment, the market ID indicated by advertisement acquisition request D7 is represented by the upper two digits of the user ID. This cannot completely specify the user of terminal 1 but can specify the market of terminal 1, so that only advertisement metadata D8 and a creative corresponding to the market ID can be transmitted to terminal 1.

### <Process Flow>

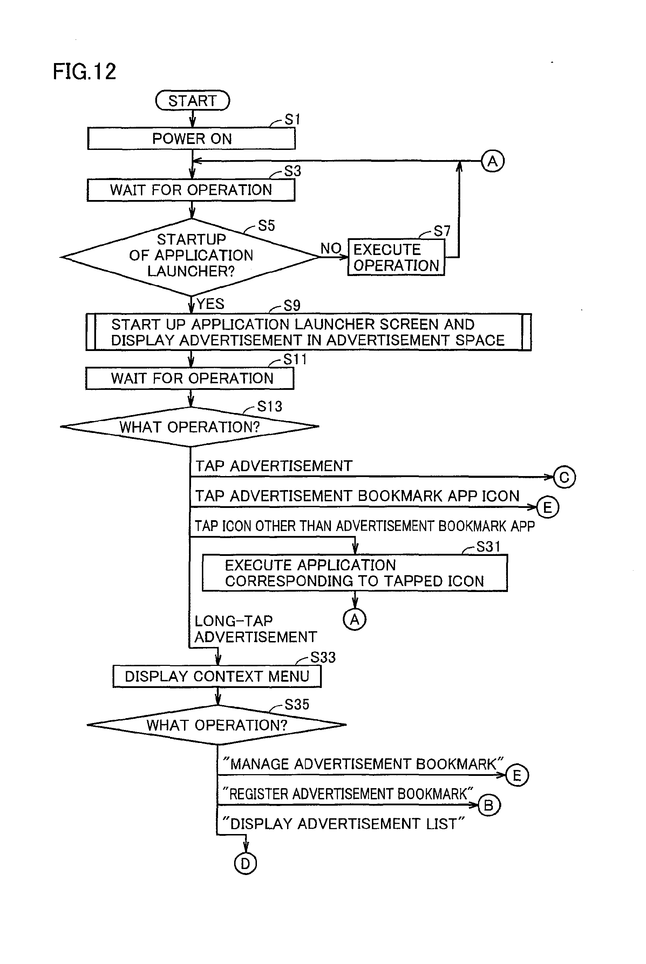

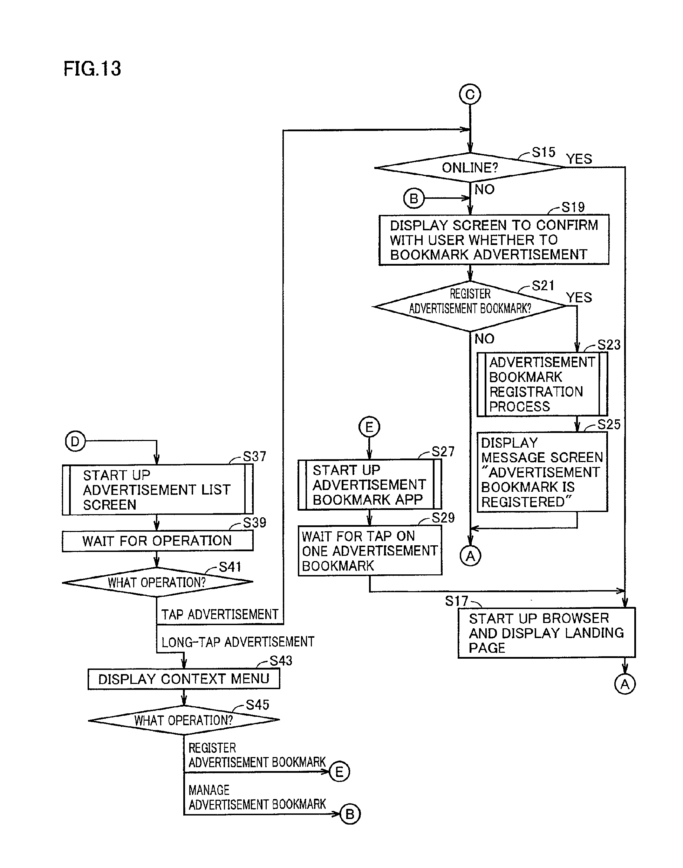

Referring to Figs. 12 and 13, a main process according to the present embodiment is described. It is assumed that a plurality of advertisement metadata D8 and creative images referred to by the advertisement metadata D8 are stored in advertisement data storage unit 25 in terminal 1.

First, terminal 1 is powered on (step S1). Operation accepting unit 28 of terminal 1 then waits for operation by the user (step S3).

Upon accepting operation, CPU 2 determines whether the accepted operation is the operation to start up the application launcher (step S5). If it is determined that the operation is not the operation to start up the application launcher, another process corresponding to an instruction based on the operation is executed (step S7), and the process then returns to step S3 again.

If it is determined that the operation is the operation to start up the application launcher (YES in step S5), the application launcher is started up. Display processing unit 20 then displays screen 61 (step S9). This process will be described later.

Operation accepting unit 28 thereafter waits for operation by the user (step S11). Upon accepting operation, it is determined what operation has been performed (step S 13). If it is determined that the operation is a tap on an advertisement in advertisement space 61 B, CPU 2 determines whether the status of terminal 1 is online, based on a transmission/reception signal of telephone network communication unit 7 or a transmission/reception signal of telephone network communication unit 7 (step S 15). If it is determined that it is online (YES in step S 15), in step S 17, the browser of display processing unit 20 is started up. The browser acquires and displays a page (referred to as landing page) of the URL associated with the tapped advertisement. The process thereafter proceeds to step S3.

Here, the URL of the landing page can be acquired by reading out the value of "link information" of the creative displayed in advertisement space 61B from advertisement metadata D8. In the present embodiment, data D81 of the creative currently being displayed in advertisement space 61B is pointed to by a pointer D82 (see Fig. 7). CPU 2 therefore acquires the URL by reading out the value of "link information" from data D81 pointed to by pointer D82 and outputs the acquired URL to the browser of display processing unit 20.

On the other hand, if it is determined that terminal 1 is not online, that is, offline (NO in step S15), display processing unit 20 displays screen 62 to confirm with the user whether to register the advertisement being displayed in advertisement space 61B as a bookmark (step S19).

Even when online, the user may wish to view the creative in advertisement space 61B later. Therefore, the advertisement may also be allowed to be registered as a bookmark online. When offline, the advertisement may be registered as a bookmark without confirming with the user.

Operation accepting unit 28 determines whether dialog 620 of screen 62 is operated. CPU 2 determines whether bookmark registration is requested based on the operation accepted by operation accepting unit 28 (step S21). If it is determined that bookmark registration is requested (YES in step S21), bookmark registration unit 23B performs an advertisement bookmark registration process (step S23) described later. In the advertisement bookmark registration process, data B(i) (where i = 1, 2, 3, ..., m) is added corresponding to data D81 of the creative being displayed in the tapped advertisement space 61B. Data B(i) indicates that the creative of the corresponding data D81 has been registered as an advertisement bookmark. The variable "i" indicates the order of bookmark registration.

Upon completion of the advertisement bookmark registration process, a message 621 indicating the advertisement bookmark registration completed appears on the screen (step S25). The process thereafter proceeds to step S3. After the process in step S25, the display may switch to screen 65.

The advertisement bookmark registered offline may automatically display the landing page associated with the advertisement bookmark when going online later.

On the other hand, if it is determined that advertisement bookmark registration is not requested in step S21 (NO in step S21), the process returns to step S3.

Here, return to the process in step S 13. In step S 13, if it is determined that the operation accepted by operation accepting unit 28 is a tap on an advertisement bookmark app icon among app icons on screen 61, the process proceeds to step S27, and CPU 2 starts up the advertisement bookmark app by bookmark processing unit 23. Second display processing unit 20B then displays screen 65. The details thereof will be described later.

Thereafter, the process waits for a tap on one bookmark (creative) from among creatives of data D81 advertisement-bookmarked that are displayed in a list on screen 65 (step S29). When selection accepting unit 29 of operation accepting unit 28 accepts a tap, in the process in step S 17, the browser displays the landing page using the URL read out from data D81 of the tapped creative.

Returning to the process in step S 13, if operation accepting unit 28 determines that the kind of accepted operation is a tap on an icon other than the advertisement bookmark app among icons 612, the process proceeds to step S31. In step S31, the application corresponding to the tapped icon is started up and executed. The process thereafter proceeds to step S3.

In step S 13, if operation accepting unit 28 determines that the operation in advertisement space 61B is a long tap, in step S33, display processing unit 20 displays context menu 611 (step S33). If offline, advertisement list 632 may be displayed without displaying context menu 611.

Subsequently, the user's operation in the displayed context menu 611 is determined (step S35). If selection accepting unit 29 of operation accepting unit 28 determines that the item "Manage advertisement bookmark" is tapped, the process proceeds to step S27, and the subsequent process is performed in the same manner as described above.

If it is determined that the item "Register advertisement bookmark" is tapped, the process proceeds to step S 19. The process subsequent to step S 19 is performed in the same manner as described above.

If it is determined that the item "Display advertisement list" is tapped, an advertisement list screen process is started in step S37 (step S37). The details of this process will be described later.

Operation accepting unit 28 thereafter waits for user's operation (step S39), and upon accepting operation, determines the kind of the accepted operation (step S41).

If it is determined that the accepted operation is a tap on an "advertisement" (creative) displayed in a list, the process proceeds to step S 15. The process in step S 15 is performed in the same manner as described above.

If it is determined that the accepted operation is a long tap on an "advertisement" (creative) displayed in a list, in step S43, context menu 631 appears.

Operation accepting unit 28 thereafter waits for user's operation (step S45). In step S45, if operation accepting unit 28 determines that the item "Register advertisement bookmark" is selected, the process proceeds to step S27. The process subsequent to step S27 is performed in the same manner as described above.

If it is determined that the item "Manage advertisement bookmark" is selected, the process proceeds to step S 19. The process subsequent to step S19 is performed in the same manner as described above.

In the foregoing steps S17, S31, S21, and S25, after the process is finished, the process returns to the initial main screen (not shown) by way of example. The process, however, may return to the display screen before processing. For example, after the process in step S 17, the process may return to a state before startup of the browser (for example, a state in which the screen of the advertisement bookmark app is displayed, a state in which screen 61 of the application launcher is displayed, or the state in which screen 63 of advertisement list 632 is displayed).

When an advertisement bookmark is tapped offline on screen 65, the process may proceed to any of the processing below.

A dialog may be displayed to ask the user whether to connect communication using the associated URL. If an instruction of connection OK is input, the browser attempts to display a landing page through communication network NT. If communication using the URL fails to be established, display processing unit 20 displays a dialog "Connection failed."

For the purpose of display offline, another data acquired in advance in terminal 1 during acquisition of advertisement data may be displayed. For example, the browser may display a simple-version landing page data (for example, HTML (Hyper Text Markup Language) data). Alternatively, another image data (for example, a larger-size image with more information) may be displayed.

### <Application Launcher Screen Process>

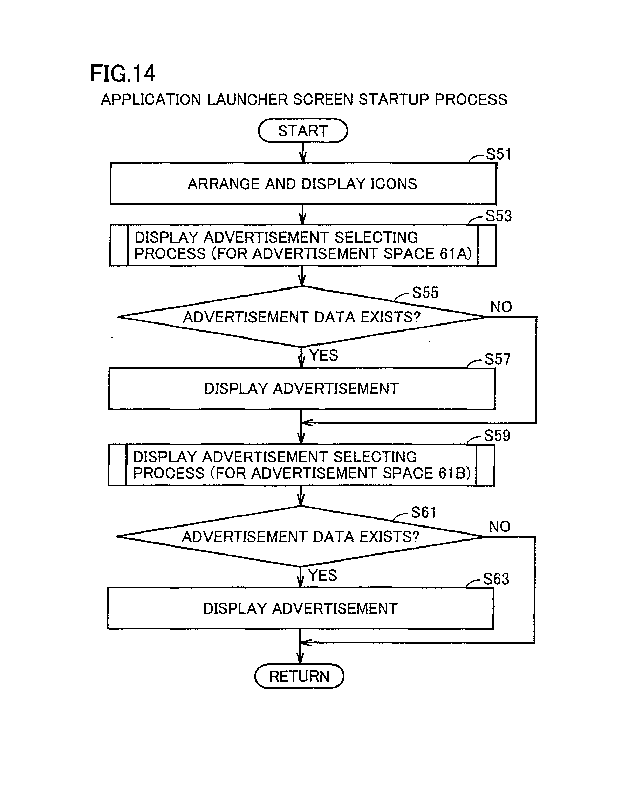

The application launcher screen process (step S9) is described with reference to Fig. 14.

First, display processing unit 20 displays icons 612 arranged corresponding to the already-registered applications in the application icon display region of screen 61 in Fig. 4(A) (step S51).

Here, data of icon 612 for uniquely identify an application is stored in storage unit 3 corresponding to each of different kinds of applications stored beforehand. Display processing unit 20 therefore reads out data of icons 612 from storage unit 3 and arranges them to be displayed on screen 61.

A process of selecting a display advertisement for advertisement space 61A (step S53) is thereafter performed. The details of the display advertisement selecting process will be described later.

CPU 2 then determines whether there exists a creative to be displayed in advertisement space 61A based on the result of the display advertisement selecting process (step S55). If it is determined that there exists no creative (NO in step S55), the process proceeds to step S59. If it is determined that there exists (YES in step S55), in step S57, a creative that meets a predetermined condition such as a market ID is displayed in advertisement space 61A (step S57). Thereafter, in step S59, a process of selecting a display advertisement for advertisement space 61B (step S59) is performed. The details of the display advertisement selecting process will be described later.

CPU 2 then determines whether there exists a creative to be displayed in advertisement space 61 B based on the result of the display advertisement selecting process (step S61). If it is determined that there exists no creative (NO in step S61), the process proceeds to the initial process in Fig. 12. If it is determined that there exists (YES in step S61), in step S63, a creative selected from among creatives currently valid in accordance with a predetermined rule is displayed in advertisement space 61B. The process thereafter returns to the process in Fig. 12.

In the present embodiment, two advertisement spaces, namely, advertisement spaces 61A and 61B are displayed on screen 61 upon startup of the application launcher. The advertisement spaces, however, may be displayed on another screen. The number of advertisement spaces displayed on one screen is not limited to two. The advertisement spaces may not be displayed on a particular screen but may be displayed in a window (region) that pops up.

Data of creatives displayed in a region of the advertisement space may be image data (still images, animation, images in accordance with GIF (Graphic Interchange Format)/PNG (Portable Network Graphics), motion images), HTML data, text data, or the like.

### <Display Advertisement Selecting Process>

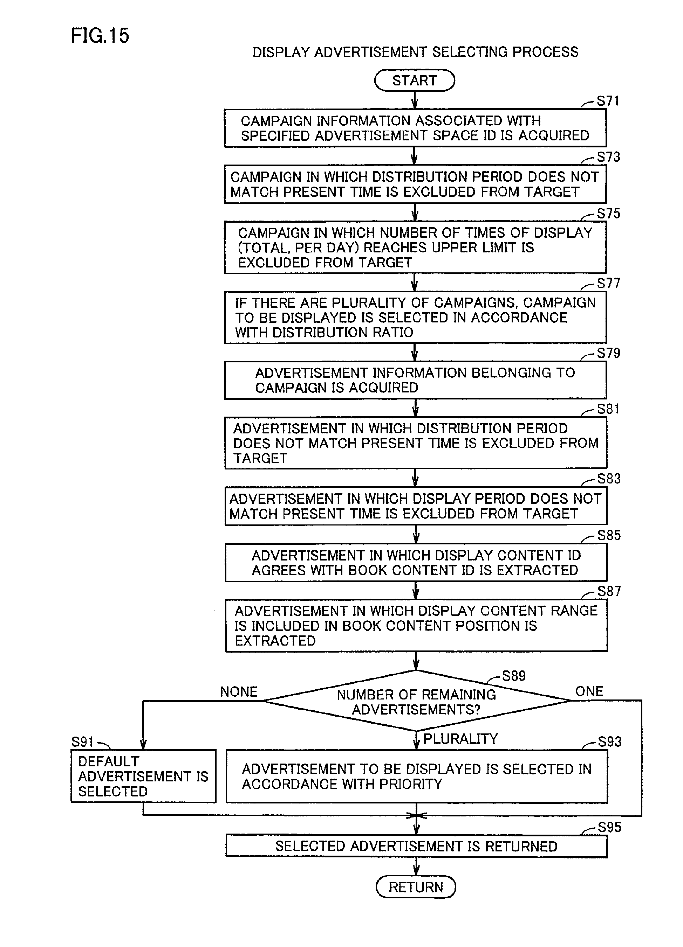

The display advertisement selecting process (steps S53 and S59 in Fig. 14) is described with reference to Fig. 15. In Fig. 14, the procedure of selecting a creative to be displayed in advertisement space 61A, 61B is shown.

First, first display processing unit 20A acquires advertisement metadata D8 of the campaign associated with the "advertisement space ID" assigned to advertisement space 61 A from among advertisement metadata D8 in storage unit 3 (step S71). The corresponding advertisement metadata D8 can therefore be identified with the advertisement space ID. Here, it is assumed that a plurality of advertisement metadata D8 of campaigns are acquired.

Next, of the acquired plurality of advertisement metadata D8, advertisement metadata D8 in which the distribution period of the campaign ID does not match the present time is excluded (step S73). Specifically, advertisement metadata D8 in which the present time measured by timer 12 does not fall in the distribution period (the start date and time, and the end date and time) of the campaign ID is excluded.

For each of the remaining advertisement metadata D8 of campaigns, advertisement metadata D8 in which the number of times of display is equal to or greater than "the upper limit value of impressions/clicks per day" of the campaign ID is excluded.

First display processing unit 20A counts the number of times of display of the creative in the advertisement space indicated by data 81 on a day-by-day basis, for each data D81 of advertisement metadata D8, and calculates the total count value of the numbers of times of display for all the creatives of advertisement metadata D8 using the count values. The value of "the number of times of creative display" of data D81 corresponding to each creative is incremented every time the creative is displayed. Accordingly, the value of "the number of times of creative display" designates the number of times of display per day. Therefore, these count values are compared with "the upper limit value of impressions/clicks per day," and when it is determined that the count or total count value on a day-by-day basis indicates the upper limit or more, based on the comparison result, that advertisement metadata D8 is excluded (step S75).

Of the remaining plurality of advertisement metadata D8, one advertisement metadata D8 of the creative to be displayed in the advertisement space is selected in accordance with the "distribution ratio" of the campaign ID (step S77). Here, the distribution ratio refers to the probability that, among advertisement metadata, the creative of that advertisement metadata is displayed in the advertisement space.

For example, in a case where three advertisement metadata D8 (for example, advertisement metadata A, B, C) are acquired through the process in step S75, and, as the "distribution ratio," "7" is set for advertisement metadata A, "2" for advertisement metadata B, and "1" for advertisement metadata C, in step S77, one of advertisement metadata A, B, and C is selected with the probability in accordance with the ratio of 7:2:1. The advertisement metadata not selected is excluded from the display target. If the "distribution ratio" is not specified, each advertisement metadata D8 is selected at the same ratio.

As a result of step S77, (a plurality of) data D81 of creatives in the selected advertisement metadata D8 are acquired (step S79).

Of the acquired data D81, data D81 in which the distribution period and the present time do not match is then excluded (step S81). In other words, data D81 in which the distribution period (the start date and time and the end date and time of the term of validity) does not correspond to the present time measured by timer 12 is excluded.

Then, of the remaining data D81, data D81 in which the display period does not match the present time is excluded (step S83). In other words, data D81 in which the display period (the display time frame and the display day of the week) does not correspond to the present time (the time frame and the day of the week) measured by timer 12 is excluded.

Then, of the remaining data D81, data D81 in which the value of the creative ID matches the value of the predetermined "book content ID" specified by display processing unit 20 is extracted (step S85). Here, it is assumed that a plurality of data D81 are extracted.

Of the extracted data D81, data D81 in which the "display content range" currently being displayed of the book content falls in the range of book content as specified by display processing unit 20 is extracted. For example, if page 100 to page 110 of an e-book is specified by display processing unit 20, data D81 that indicates "display content range" indicating a page falling within the range of "page 100 to page 110" is extracted (step S87). In some cases, no data D81 may be extracted, or one or more (two or more) data D81 may be extracted.

The number of data D81 extracted in step S87 is determined (step S89). If it is determined that there exists "no" extracted data D81 ("none" in step S89), a creative of a default advertisement stored in advance in storage unit 3 is selected (step S91).

If it is determined that "a plurality of" data D81 are extracted in step S87 ("a plurality" in step S89), one data D81 is selected in accordance with the value of "priority" of each data D81 (step S93). The priority is shown, for example, by an integer value from one to nine. Therefore, data D81 with the smallest value of priority is selected.

If it is determined that "one" data D81 is left ("one" in step S89), that data D81 is selected.

Data D81 selected in the foregoing manner or the creative of the default advertisement is provided to the process in Fig. 14, in the process in step S95. The process thereafter returns to the process in Fig. 14.

The "display content range" of a book content as described above is described.

For example, it is assumed that terminal 1 is used as an e-book viewer terminal. Each e-book content is provided with an identification ID (= book content ID), and the book content ID of the e-book content currently being displayed on terminal 1 specifies the "display content ID" described above. As for this "display content ID," when the e-book viewer (a function of display processing unit 20 that displays the content of e-book content) starts displaying the e-book content, the book content ID thereof is stored into temporary storage unit 4 of terminal 1. The predetermined "book content ID" described above can be acquired by reading out the book content ID from temporary storage unit 4.

During display of an e-book content, the e-book viewer stores the position currently being displayed (for example, the number of pages of the e-book, the proportion (percentage) of the number of current display pages to the total number of pages) into temporary storage unit 4. The "display content range" currently being displayed of the book content can be acquired.

In this manner, in the present embodiment, for each advertisement space, the creative to be displayed in the advertisement space is selected in two steps as described above. First, of the campaigns associated with the advertisement space, the one that does not satisfy the display control conditions is excluded. Next, for each of the remaining campaigns not excluded, of the creatives included therein, the one that does not satisfy the display control conditions is excluded. Accordingly, only the creative that satisfies the predetermined display control conditions can be selected.

In the present embodiment, if a creative to be displayed in advertisement space 61A (or 61B) fails to be extracted (none exists), a default creative is selected. The selection procedure, however, is not limited thereto.

For example, even though the advertisement space is displayed, none may be displayed in the advertisement space. Alternatively, an alternative image (an image that is not a default creative) stored in storage unit 3 of terminal 1 may be displayed in the advertisement space, or the advertisement space may not be displayed per se.

### <Other Display Control Conditions According to Characteristics of Advertisement>

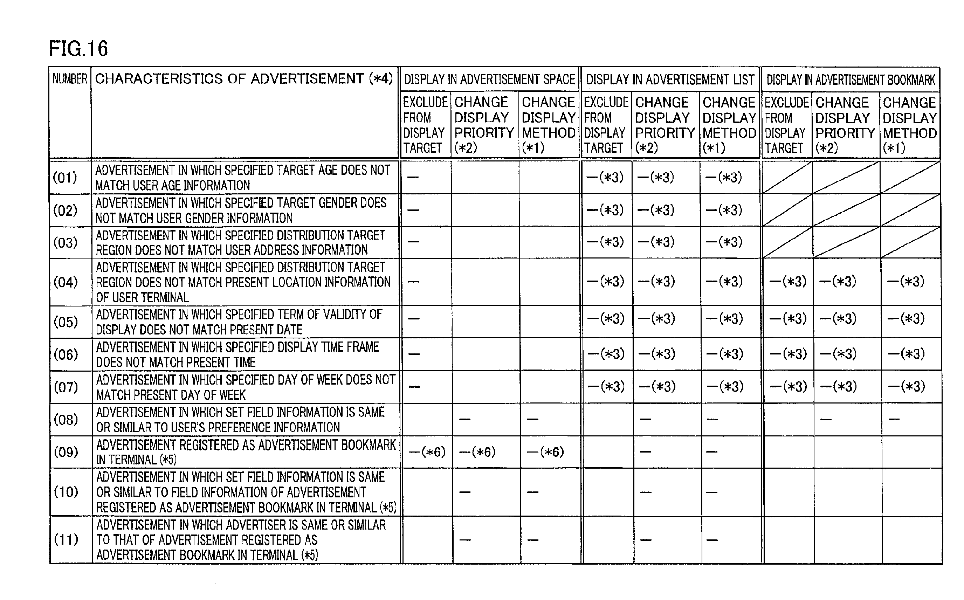

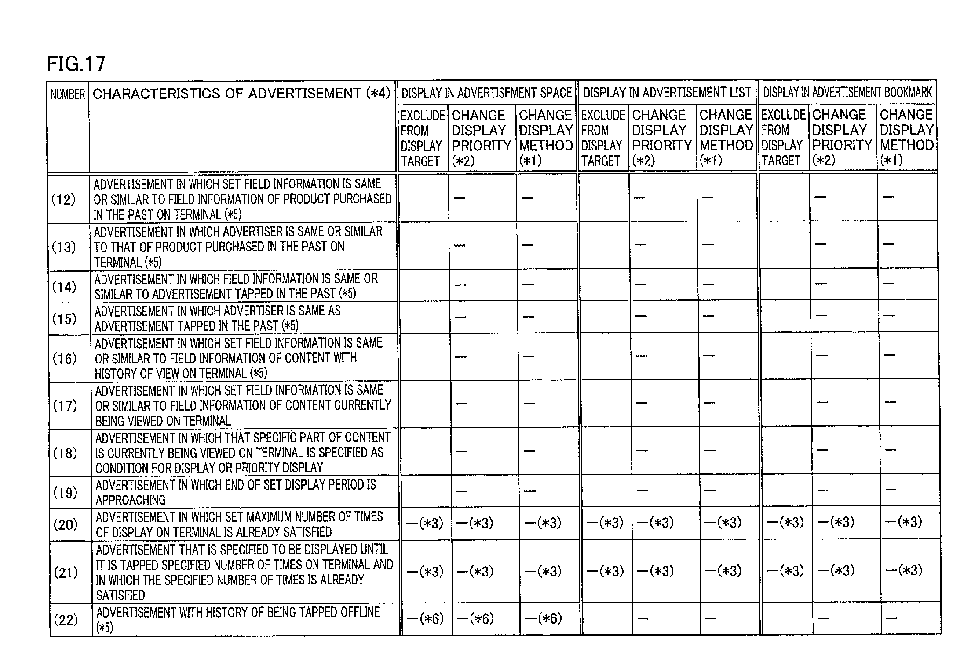

The conditions of selecting a creative to be displayed in advertisement spaces 61A and 61B are not limited to the conditions shown in Fig. 15. Figs. 16 and 17 show examples of other conditions identified with numbers (01) to (22) in the form of a table.

As shown in the tables in Figs. 16 and 17, the advertiser or advertisement distributor can set display control conditions for an advertisement (creative) to be distributed. The specifying conditions, such as market ID, target age, target gender, term of validity, display day of the week, display time, field, and distribution target region, are compared with the information stored in terminal 1. Display of creative is thus controlled.

Data in accordance with the conditions in Figs. 16 and 17 is additionally registered in data D81 corresponding to each creative, whereby display control of creatives in advertisement space 6 1 A, 6 1 B, display control of creative in advertisement list 632, and display control of advertisement bookmark on screen 65 can be performed by comparing the conditions of data D81 with the user information, etc. stored in terminal 1. In this manner, a creative suitable for user's information and advertiser's wishes can be distributed (displayed) without transmitting personal information such as preferences of the user of terminal 1 to the outside.

In the tables in Figs. 16 and 17, a set of display control conditions including "characteristics of advertisement," "display in advertisement space," "display in advertisement list," and "display in advertisement book" is provided corresponding to each "number" (01) to (22). The "characteristics of advertisement" refers to the characteristics of an advertisement related to display control. The "display in advertisement space" refers to a display manner of a creative in the advertisement space. The "display in advertisement list" refers to a display manner of a creative in advertisement list 632. The "display of advertisement bookmark" refers to a display manner of a creative on screen 65. These display manners differ from the normal creative display manner.

For each set of display control conditions in Figs. 16 and 17, the condition in a row with a hyphen ("-") mark may be applied (may not be applied), and the condition without a hyphen mark is not applied. A plurality of applicable conditions with a hyphen mark may be combined.

An example of changing display methods as indicated by (*1) in Figs. 16 and 17 is explained.

Examples of a common method that can be used for display of a creative in advertisement spaces 61A, 61B, display of a creative in advertisement list 632, and display of an advertisement bookmark on screen 65 include changing the color of the advertisement space, display with the color tone or brightness of the creative being changed (for example, the creative currently invalid is displayed darkly with a reduced brightness), allowing the creative to flash (giving a glowing effect for a short period of time), allowing the creative to blink, rotating the creative (rotating the advertisement space and the creative inside thereof), shaking the creative (slightly moving the display position of the advertisement space for a short period of time as if the creative was shaken), producing sound effects, allowing terminal 1 to vibrate (using a not-shown vibration function of terminal 1 to allow terminal 1 to vibrate for a short period of time), and displaying a mark in addition to the creative.

As for the advertisement space, the display position of the advertisement space may be changed (for example, in a case where the advertisement space is usually displayed in the lower portion of screen 61 of the application launcher, the display position thereof may be changed to the upper portion of screen 61).

By changing the display manners in this way, it can be expected that the user is less likely to miss an interesting advertisement, while the advertiser can expect improvement of advertising effectiveness.

Examples of changing the display priority as indicated by (*2) in Figs. 16 and 17 include displaying the creative that meets the condition on a higher level (in the first place, by priority) or conversely on a lower level.

As for (*3) in Figs. 16 and 17, the creative that matches the corresponding advertisement characteristic may be excluded from the target and hidden, or may be displayed in such a display manner that suggests the creative is currently invalid. Alternatively, the creative currently invalid may be hidden.

If there are a plurality of creatives that satisfy the characteristics of advertisement (*4) corresponding to numbers (08) to (17) in Figs. 16 and 17, the priority order of display may be specified.

For a plurality of creatives that satisfy the characteristics of advertisement indicated by (*5) in Figs. 16 and 17, the display frequency may be increased or the display time may be prolonged for the creative recently used.

The creative as indicated by (*6) in Figs. 16 and 17 is "registered as an advertisement bookmark or tapped" so that it may be displayed in such a manner as to "be subsequently hidden or be subsequently displayed with a lower priority or inconspicuously because an object of attracting the user's interest has been achieved." Alternatively, it may be displayed in such a manner as to "be continuously displayed with a higher priority or distinctively because it is a creative that attracts the user's interest."

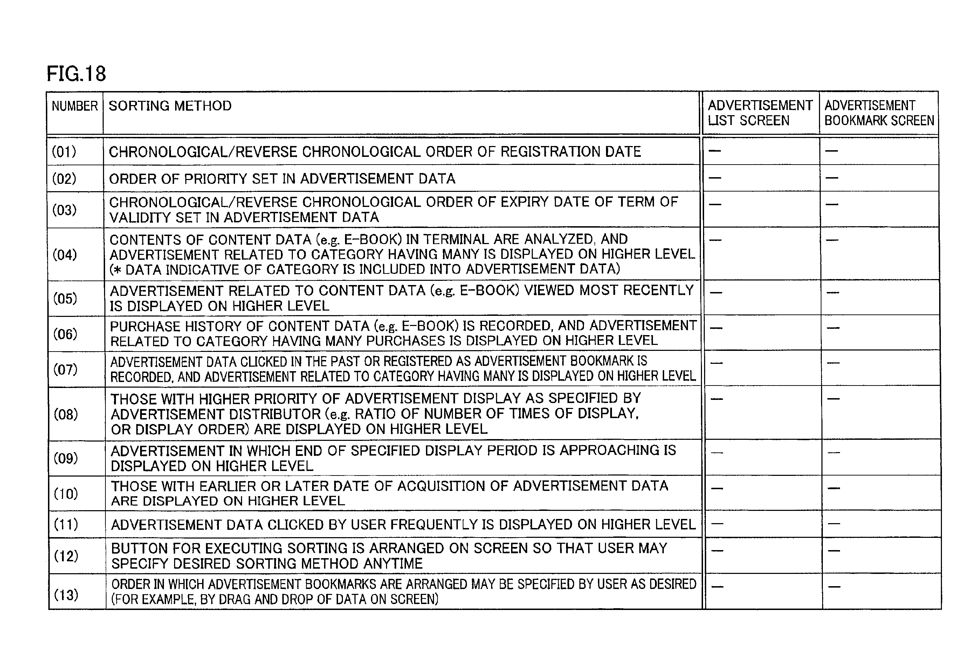

Fig. 18 shows examples of the control method for controlling the display order of creatives. The arrangement order of creatives to display a list of creatives in advertisement list 632 and on screen 65 of advertisement bookmarks can be controlled with the condition settings shown in Fig. 18.

The setting conditions shown in a table in Fig. 18 are described. The hyphen ("-") mark in the table indicates that the method provided in the "sorting method" field corresponding to the hyphen mark may be applied (may not be applied). Where there is no hyphen mark, the method provided in the corresponding "sorting method" field is not applied. A plurality of applicable sorting methods with a hyphen mark can be combined.

### <Advertisement List Screen Process>

Here, it is assumed that a plurality of data D81 are extracted in the process in step S87 in Fig. 15 described above. The extracted plurality of data D81 are passed to the advertisement list screen process.

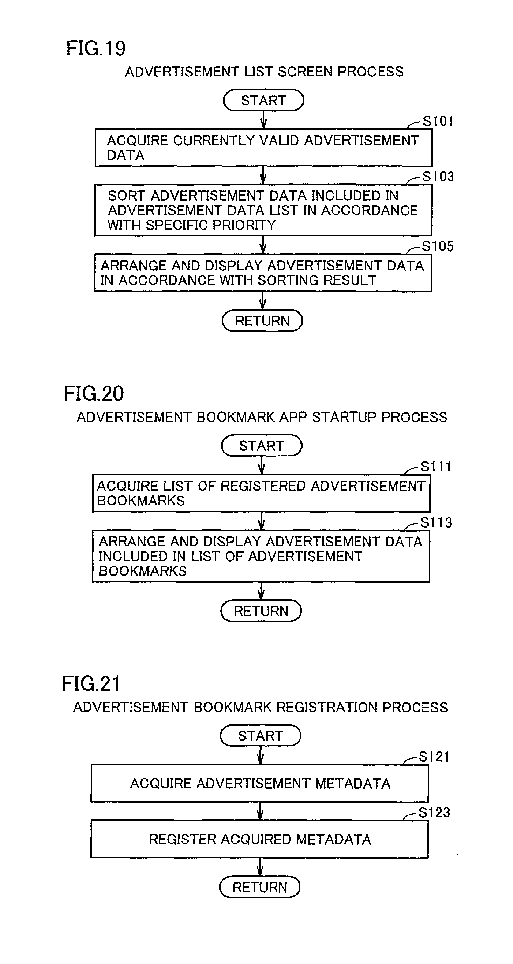

Referring to Fig. 19, the advertisement list screen process (step S37) in Fig. 13 is described.

Second display processing unit 20B of display processing unit 20 acquires a plurality of data D81 extracted in the process in step S87 in Fig. 15 (step S101).

The acquired data D81 are then sorted in ascending order or descending order in accordance with the values of "priority" (step S103). Second display processing unit 20B reads out the creative images of the sorted data D81 from storage unit 3 based on the "creative image save path" and displays a list of advertisements 633 of the read creative images as advertisement list 632 (step S105: see screen 63 in Fig. 4). The process thereafter returns to the process in Fig. 13.

Second display processing unit 20B arranges the creative long-tapped by the user in step S 13 (the creative displayed in advertisement space 6 1 B) such that it breaks in at the position where the creative of advertisement list 632 is displayed (that is, the position corresponding to the advertisement space 61B).

In general, it can be assumed that the selected creative is successively tapped. Therefore, the creative long-tapped can be displayed at the same position as (or close to) the position where it is long-tapped, so that user's operability is not impaired.

Such arrangement is not necessarily employed. The creative selected by a long tap may also be handled in the same manner as other creatives and displayed at the position in accordance with the sorted order.

With advertisement list 632, advertisements other than the advertisement (creative) in advertisement space 61B that the user now sees and selects are displayed simultaneously, thereby expanding opportunities of presenting advertisements to the user. The advertiser thus can expect improvement of advertising effectiveness.

In addition, when the user wishes to review the advertisement that the user viewed in the past, the user can easily find it from the presented advertisement list 632.

Moreover, the user can actively select and view an advertisement from advertisement list 632 rather than following the advertisement display control method in accordance with values of attributes of data D81 set by the advertisement distributor.

The size of display region of advertisement list 632 may be variable depending on the number of creatives in creative list 632. When the number of creatives is small, the size of the display region may be reduced. When there are too many that advertisement list 632 does not fit in one screen, the screen may be scrolled so that advertisement list 632 can be seen.

### < Advertisement Bookmark App Startup>

Referring to Fig. 20, startup of the advertisement bookmark app in Fig. 13 (step S27) is described.

CPU 2 acquires a list of already-registered advertisement bookmarks (step S111). Specifically, the value (address) of "creative image save path" of each data D81 with data B(i) added thereto is read out from advertisement metadata D8 in advertisement data storage unit 25. Advertisement data storage unit 25 is then searched based on the read value to read out the corresponding creative image. The creative image for displaying a list of advertisement bookmarks is thus acquired.

CPU 2 outputs the acquired creative image to second display processing unit 20B. Second display processing unit 20B displays a list of provided creative images in the display region of display unit 6 (step S113: see screen 65 in Fig. 4). The process thereafter returns to the process in Fig. 13.

The display region of screen 65 may be variable depending on the number of creatives displayed in a list. If there are few, the size may be reduced. If there are too many to fit in one screen, they may be scrolled.

By using the "advertisement bookmark," the advertisement that the user is interested in can be stored with addition of a bookmark (data B(i)). Accordingly, the user can promptly view the interesting advertisement only by starting up the advertisement bookmark app. As a result, the advertiser can expect expansion of opportunities of user acquisition and improvement of advertising effectiveness.

Here, the "advertisement bookmark" function is handled separately from a general bookmark function of a browser. However, the "advertisement bookmark" function using the bookmark function of the browser may be provided. More specifically, the URL of the landing page associated with the user's favorite advertisement (creative), that is, the value (URL) of "link information" of data D81 of the creative may be managed using the bookmark function of the browser. In this case, the browser manages (stores) the URL of the favorite advertisement (creative) in a predetermined area of storage unit 3. When the browser displays the URL read out from storage unit 3 online and the user designates the displayed URL, the browser may acquire the landing page of the designated URL and display the acquired landing page on display unit 6. Also in this manner, the user can acquire related information of the favorite advertisement.

The user can give an instruction to delete a creative as desired from the list of creatives of advertisement bookmarks on screen 65 through operation unit 5. Data B(i) added to data D81 of the creative is then deleted, so that the bookmark registration of the creative is cleared. This operation may delete data D81 of the creative and the creative image from advertisement data storage unit 25.

### <Advertisement Bookmark Registration Process>

Referring to Fig. 21, the advertisement bookmark registration process in Fig. 13 (step S23) is described.

Bookmark registration unit 23B reads out data D81 of the creative tapped in advertisement space 61B or the creative tapped or long-tapped in advertisement list 632, from advertisement metadata D8 (step S121).

The read data D81 is then registered as an advertisement bookmark (step S123).

That is, data B(i) of the data D81 is added. The process then returns to the process in Fig. 13. Accordingly, the favorite or interesting advertisement (creative) specified by the user through a tap or long-tap can be registered as an "advertisement bookmark".

Here, bookmark registration unit 23B registers an advertisement bookmark by adding data B(i) to data D81. However, a not-shown database for advertisement bookmark management in advertisement data storage unit 25 may be used. More specifically, data D81 of the creative tapped or long-tapped by the user may be read out from advertisement metadata D8 and registered in the database for advertisement bookmark management in advertisement data storage unit 25.

The user may operate a button or specify the item of menus so that the advertisement bookmark specified is deleted by bookmark management unit 23A. More specifically, the added data B(i) may be deleted or data D81 of the corresponding creative may be deleted from the database for advertisement bookmark management (or data D81 is set in a readout-disabled state in the database for advertisement bookmark management). Alternatively, irrespective of the user's instruction, bookmark management unit 23A may delete, of the registered advertisement bookmarks, the one whose term of validity as specified by the "start date and time of term of validity" and the "end date and time of term of validity" of the corresponding data D81 expires, through the procedure described above.

In deletion based on the term of validity, a mark indicative of deletion completed is displayed a predetermined number of times or for a prescribed period of time after the deletion so that the user is aware of deletion. Alternatively, the display color of the mark is changed. The user may restore the advertisement bookmark data by cancelling the deletion based on the term of validity. The restoration refers to, for example, adding data B(i) again to the corresponding data D81 or changing the data D81 in a readout-disabled state to a readout-enabled state in the database for advertisement bookmark management.

Bookmark management unit 23A may manage advertisement bookmarks in groups (classify them using folders).

As for advertisement bookmarks, the advertiser or advertisement distributor may set the term of validity of an advertisement bookmark independently of the "start date and time of term of validity" and the "end date and time of term of validity" of the corresponding data D81. For example, even though the "start data and time of term of validity" and "end date and time of term of validity" indicates one week after the start of distribution of the creativity, if the creative is bookmarked, the term of validity of the advertisement bookmark may be set to two weeks after the start of distribution of the advertisement.

### <Advertisement Data Acquisition Main Process>

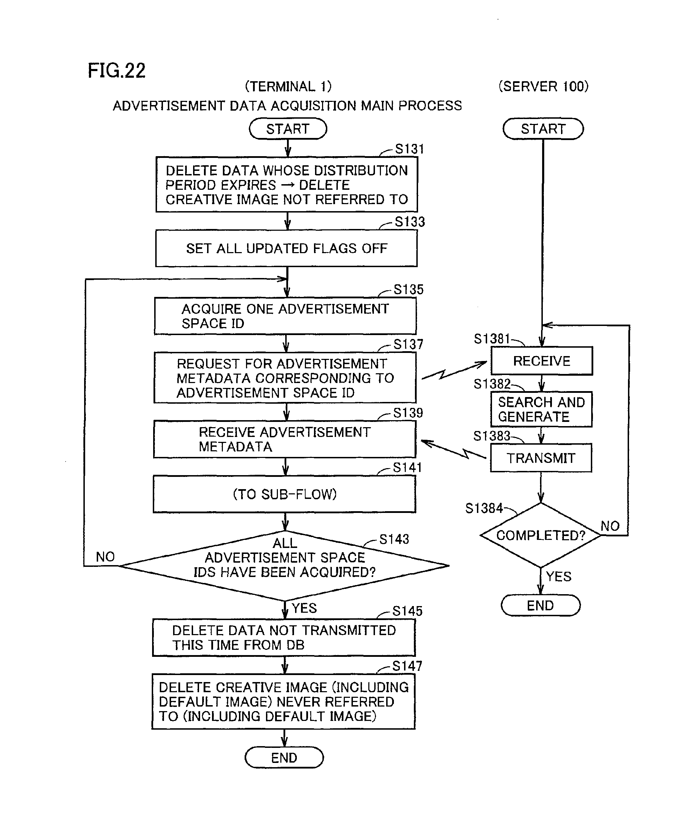

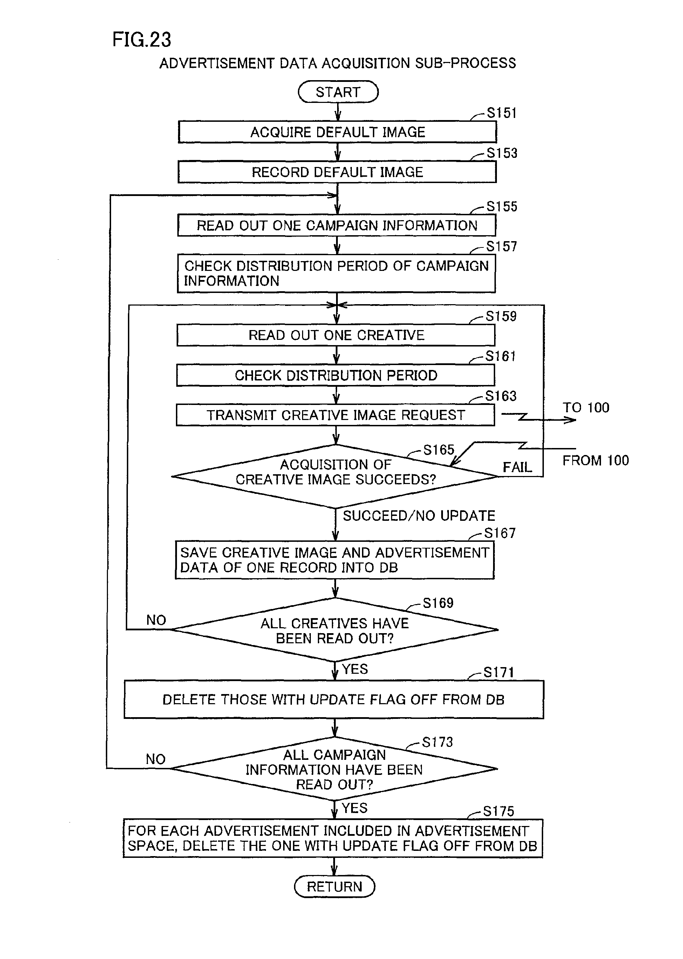

In the present embodiment, advertisement acquisition unit 21 of terminal 1 acquires advertisement information (advertisement metadata D8 and creative) from server 100 periodically or non-periodically in accordance with the process flow in Figs. 22 and 23. Here, it is assumed that a plurality of advertisement metadata D8 are stored in advertisement metadata storage unit 25.

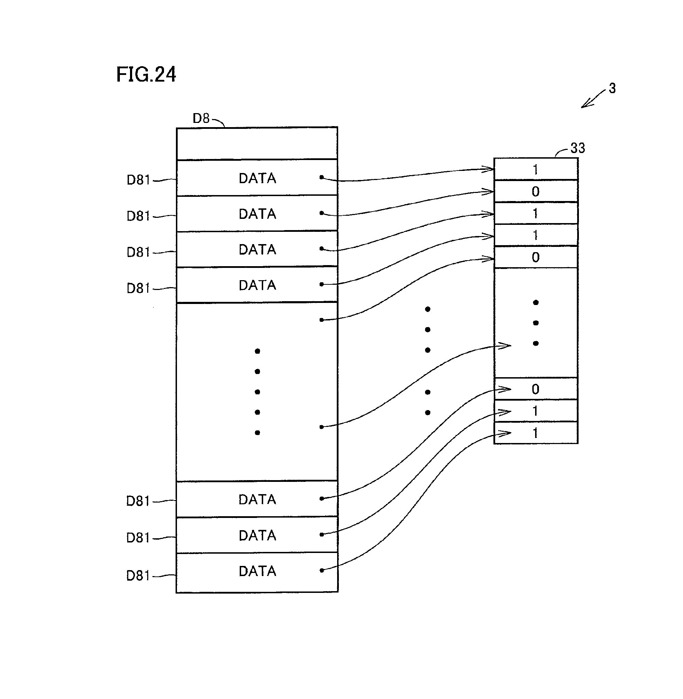

Advertisement acquisition unit 21 uses status data 33 in Fig. 24 corresponding to each advertisement metadata D8 in order to acquire advertisement metadata D8 and creative from server 100.

Status data 33 in Fig. 24 is stored in storage unit 3. Status data 33 is a set of flags. A flag corresponds to one bit. Each bit of status data 33 has one-to-one correspondence with each data D81 of the corresponding advertisement metadata D8. If a flag corresponding to data D81 is set "OFF" ("0"), it is indicated that acquisition of the creative of data D81 fails, and if it is set "ON" ("1"), it is indicated that acquisition of the creative of data D81 succeeds.

Referring to Fig. 22, advertisement acquisition unit 21 compares the distribution period (a period indicated by the "start date and time of term of validity" and "end date and time of term of validity") of each data 81 of advertisement metadata D8 with the present time indicated by the time data output by timer 12. Based on the comparison result, data D81 in which the present time does not fall in the distribution period is deleted from advertisement metadata D8 (step S 131). This can avoid shortage of space of storage unit 3.

Advertisement acquisition unit 21 then sets all the flags OFF of status data 33 corresponding to advertisement metadata D8 (step S133).

Advertisement acquisition unit 21 then reads out the value of "advertisement space ID" from advertisement metadata D8 (step S135) and transmits a request for acquiring advertisement metadata including the read "advertisement space ID" to server 100 (step S137). If terminal 1 cannot transmit the acquisition request depending on the status of communication network NT, transmission of the acquisition request may be repeated.

Advertisement distribution unit 1011 of server 100 receives the acquisition request from terminal 1 (step S1381). Advertisement distribution unit 1011 then searches advertisement space management DB 1021 based on the "advertisement space ID" in the received acquisition request and reads out record R1 having an "ID" that designates the value of the "advertisement ID." Advertisement distribution unit 1011 then searches creative DB 1022 based on the "creative ID" in the read record R1 and reads out one or more records R2 having a "creative ID" that designates the value of the "creative ID". Advertisement metadata D8 is generated from the records R1 and R2 read out in this manner (step S 1382). The generated advertisement metadata D8 is transmitted to terminal 1 (step S1383). Server 100 terminates the process if it no longer receives the acquisition request from terminal 1 (YES in step S1384). While server 100 is receiving, the process returns to step S1381.

When terminal 1 receives advertisement metadata D8 from server 100 (step S139), the process proceeds to a subroutine process of advertisement data acquisition (see Fig. 23).

Referring to Fig. 23, in the subroutine process, advertisement acquisition unit 21 acquires a default creative image from server 100 (step S15). The default creative image is thereafter stored into advertisement data storage unit 25 (step S 153).

Advertisement acquisition unit 21 reads out one advertisement metadata D8 received (step S155). The read advertisement metadata D8 refers to information related to a corresponding campaign (hereinafter referred to as campaign information). Advertisement acquisition unit 21 checks the distribution period for the campaign information (step S 157). Specifically, based on the "distribution period" specified by the "campaign ID" and the present time measured by timer 12, if the present time falls in the distribution period, the campaign information is determined to be valid, otherwise the campaign information is discarded as being invalid. As a result of checking, the campaign information determined to be valid is subjected to the following process.

First, advertisement acquisition unit 21 reads out one data 81 from advertisement metadata D8 of the campaign information (step S 159). For the read data D81, the distribution period ("start date and time of term of validity" and "end date and time of term of validity") is compared with the present time measured by timer 12. Based on the result of comparison, data D81 in which the present time does not fall in the distribution period is discarded as being invalid. Here, it is assumed that data D81 is such valid data in that the present time falls in the distribution period (step S161).

Advertisement acquisition unit 21 then reads out the value of "creative ID" from data D81 and transmits a request for acquiring a creative image including that value to server 100 (step S163). Upon receiving the acquisition request, advertisement distribution unit 1011 of server 100 searches storage unit 102 based on the value of "creative ID" included in the acquisition request and acquires the corresponding creative image. The acquired creative image is transmitted to terminal 1. Advertisement distribution unit 1011 adds data of the latest update time of the image to the creative image to be transmitted and transmits the added data. The "creative ID" may refer to an URL related to the creative image.

Advertisement acquisition unit 21 determines whether reception of a creative image succeeds (step S165). If it is determined that acquisition of a creative image fails ("fail" in step S165), the process proceeds to step S 159, and the process is performed on the next data D81.

On the other hand, if it is determined that acquisition of a creative image succeeds or no update ("succeed/no update" in step S165), the process proceeds to step S167. Here, advertisement acquisition unit 21 compares data of the update time added to the received creative image with the "creative update time" in data D81. As a result of comparison, if it is determined that the added update time is earlier than the "creative update time," advertisement acquisition unit 21 determines that the creative image is "not updated." If it is determined that the added update time is later than the "creative update time," advertisement acquisition unit 21 determines that acquisition of the creative image "succeeds."

In step S 167, advertisement acquisition unit 21 stores the creative image determined to "succeed," that is, updated, into advertisement data storage unit 25 and sets ON the flag of status data 33 corresponding to data D81 of the creative image determined as "succeed/no update" (step S167). Advertisement acquisition unit 21 stores the creative image into advertisement data storage unit 25 based on the value (address value) of "creative image save path" of the data D81.

If it is determined that the received creative image is determined as "no update," that is, if it is determined that it agrees with the creative image already received (acquired) by terminal 1, that creative image does not have to be stored into advertisement data storage unit 25, and advertisement acquisition unit 21 discards that creative image.

Advertisement acquisition unit 21 then determines whether all data D81 are read out from advertisement metadata D8 of the campaign information (step S169). If it is determined that all data D81 are not read out (NO in step S169), the process returns to step S159, and the next data D81 is read out and subjected to the same process.

If it is determined that all data D81 are read out (YES in step S169), data D81 corresponding to the flag set "OFF" of status data 33 is deleted from advertisement metadata D8 of the campaign information (step S171).

Advertisement acquisition unit 21 then determines whether advertisement metadata D8 of all the campaign information have been read out (step S 173). If it is determined that all have not yet been read out (NO in step S 173), the process returns to step S155, and the subsequent process is performed similarly for advertisement metadata D8 of the next campaign information.

On the other hand, if it is determined that advertisement metadata D8 of all the campaign information have been read out (YES in step S 173), data D81 having the flag set OFF of status data D33 corresponding to each advertisement metadata D8 of the advertisement space is deleted from advertisement metadata D8 (step S175). The process thereafter returns to the original process in Fig. 22.

Returning to the process in Fig. 22, after completion of the process in Fig. 23, in step S 143, advertisement acquisition unit 21 determines whether data related to advertisements for all the advertisement space IDs has been acquired (step S143). If it is determined that all the data have been acquired (YES in step S143), the process proceeds to step S 145 described later. If it is determined that all have not been acquired, the process proceeds to step S135, and the subsequent process is performed similarly for the next advertisement space ID.

In step S 145, for each advertisement metadata D8, data D81 for which the corresponding creative image is not transmitted from server 100 is deleted, based on the flag of the corresponding status data 33. This can increase free space of storage unit 3.

Advertisement acquisition unit 21 then deletes the creative image not referred to from advertisement data storage unit 25 (step S147). Specifically, advertisement acquisition unit 21 deletes the creative image designated by the "creative image save path" of data D81 deleted through the process above, from advertisement data storage unit 25. This can increase free space of storage unit 3.

Advertisement acquisition unit 21 may start the process above independently (asynchronously) of the main flow in Figs. 12 and 13 when terminal 1 is offline or may start the process above as designated by user's operation. It may be started by both cases.

The time for processing by advertisement acquisition unit 21 offline may be decided. For example, the processing may be performed periodically, for example, once a week (for example, at midnight on Sunday), once a day (for example, at midnight every day), or once an hour (for example, at the end of every hour).

The process may be started when terminal 1 changes from offline to online. That is, the process starts every time terminal 1 changes from offline to online through any other operations or once in several times. Alternatively, the process may be started when connection is established via wireless LAN.

The process may be started in accordance with data of the creative already acquired. For example, the process described above may be started if the date and time indicated by the "end date and time of term of validity" has passed, or if a predetermined number (or a predetermined proportion) of data D81 approaching the "end date and time of term of validity" are included in advertisement metadata D8.

In the process described above, a distribution period is used as a creative display control condition. A creative in which the display control conditions is set is deleted from advertisement data storage unit 25 and subsequently not displayed on display unit 6 when it no longer satisfies the conditions. However, without deletion, when display processing unit 20 displays a creative image, whether to display/not display may be determined based on the display control conditions.

Advertisement acquisition unit 21 may acquire all the creative images every time or may acquire a new creative image only for the creative image with the display control conditions set "invalid" and replace it with the new creative image. The timing for acquiring is, for example, once a week (for example, at midnight on Sunday), once a day (for example, at midnight every day), or once an hour (for example, at the end of every hour).

According to the present embodiment, when the user misses an advertisement (creative), operation to display the advertisement is performed. Even when the advertisement displayed again differs from the intended advertisement, a list of advertisements that have been displayed in the advertisement space (including an advertisement downloaded but not yet displayed) is displayed by selecting that advertisement space (through input operation such as a click or tap), so that the intended advertisement can easily be found therefrom.

The advertisement information is deleted upon expiration of the term of validity, and the advertisement information can be presented to the user even offline before expiration. When going on line again, the expired advertisement information can be updated, thereby preventing the user from being confused with the expired advertisement.

In a case of a tap operation offline, operation such as registration as a bookmark is performed without changing the initial destination to be accessed, thereby giving the opportunity to reach effective information when going online next time, without wasting the user's operation.

### (Modification)

In the advertisement acquisition process by advertisement acquisition unit 21, server 100 transmits (distributes) advertisement data matched with the advertisement space ID to terminal 1. However, the advertisement data matched with the user ID of data D4 (see Fig. 6(C)) in place of the advertisement space ID may be distributed.

Specifically, terminal 1 transmits an acquisition request including data D4 to server 100. Advertisement distribution unit 1011 of server 100 searches user information DB 1023 based on the user ID in the received data D4 and reads out information of the user' age and gender. A creative image in which the values of "target age" and "target gender" match the read age and gender, and the "start date and time of term of validity" and "end date and time of term of validity" designates the term of validity may be distributed.

Server 100 may distribute a creative image matched with a market ID to terminal 1. More specifically, as the upper two digits of the user ID allocated to each user indicates a market ID, server 100 can specify a market although it cannot specify the user's personal information completely from the acquisition request received from terminal 1. Accordingly, only the advertisement information that is matched with a market can be distributed.

### [Other Embodiments]

The advertisement distribution method, display method, and management method as described above can be provided as a program. A computer-readable recording medium such as a flexible disk, a CD-ROM, a ROM, a RAM, and a memory card supplied with a computer that is encoded with such a program may be provided as a program product. Alternatively, a recording medium such as a hard disk included in a computer that is encoded with the program may be provided. The program downloaded via a network may be provided. For example, in the configuration in Fig. 1, terminal 1 with CPU 2 and having a computer function may be supplied with the program using memory card 11. CPU 2 reads out and executes the program stored in memory card 11 through I/F 10. The program may be downloaded through communication network NT to terminal 1 and stored into storage unit 3.

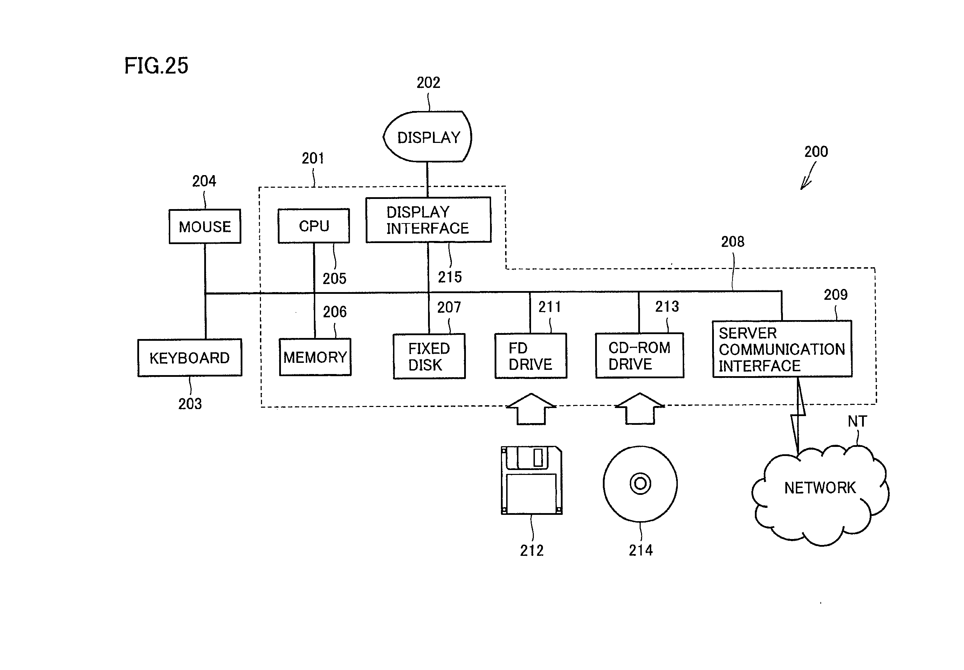

PC 200 is also provided with a program in the same manner. Fig. 25 shows an exemplary configuration of PC 200. Referring to Fig. 25, PC 200 has a processing unit 201, a display 202 such as a CRT (Cathode Ray Tube) or a liquid crystal display, a keyboard 203, and a mouse 204. Processing unit 201 includes a CPU 205 for centrally controlling PC 200 per se, a memory 206 configured to include a ROM or a RAM, a fixed disk 207, an FD drive 211 having an FD (Flexible Disk) 212 removably attached thereto for accessing the attached FD 212, a CD-ROM drive 213 having a CD-ROM (Compact Disc Read Only Memory) 214 removably attached thereto for accessing the attached CD-ROM 214, and a communication interface 209 for communication connection between communication network NT and PC 200. These units are connected via communication through a bus 208.

PC 200 may be provided with a magnetic tape device having a cassette-type magnetic tape removably attached thereto for accessing the magnetic tape.

PC 200 in Fig. 25 can be provided with a program using FD 212 and CD-ROM 214. A program may be downloaded to PC 200 through communication network NT and stored into memory 206 or fixed disk 207.

In this manner, terminal 1 and PC 200 are supplied with a program product for implementing the method according to the foregoing embodiment using a computer. The program product includes the program per se and a recording medium encoded with the program.

The embodiments disclosed here should be understood as being illustrative rather than being limitative in all respects. The scope of the present invention is shown not in the foregoing description but in the claims, and it is intended that all modifications that come within the meaning and range of equivalence to the claims are embraced here.

### REFERENCE SIGNS LIST

3 storage unit, 4 temporary storage unit, 5 operation unit, 5A touch panel input device, 5B trackball unit, 6 display unit, 7 telephone network communication unit, 9 communication unit, 11 memory card, 12 timer, 20 display processing unit, 20A first display processing unit, 20B second display processing unit, 21 advertisement acquisition unit, 23 bookmark processing unit, 23A bookmark management unit, 23B bookmark registration unit, 25 advertisement data storage unit, 27 data search unit, 28 operation accepting unit, 29 selection accepting unit, 33 status data.

## Claims

1. An advertisement distribution system, comprising:
a server (100) distributing advertisement information; and
a terminal (1) communicating with said server through a communication line,
said terminal including
an output unit (6) for outputting information received through said communication line,
an information accepting unit for accepting information related to the terminal, and an advertisement request unit (7) for transmitting an advertisement request including the information related to the terminal to said server,
said server including
an advertisement storage unit (102) for storing beforehand a plurality of advertisement information and information corresponding to each advertisement information that is related to a terminal as a distribution target of the advertisement information, wherein
said server reads out said advertisement information corresponding to the information related to the terminal in the received advertisement request from said advertisement storage unit and transmits the read advertisement information to said terminal, and
said information related to the terminal indicates market information that designates a sales channel of the terminal.

2. The advertisement distribution system according to claim 1, wherein said market information corresponds to part of identification information of a user of said terminal.

3. The advertisement distribution system according to claim 1, wherein each advertisement information in said advertisement storage means includes distribution period information that indicates a period during which the advertisement information is to be distributed, and
said server determines whether to transmit the advertisement information to said terminal, based on said distribution period information of the advertisement information read out from said advertisement storage unit.

4. The advertisement distribution system according to claim 1, wherein
said advertisement information includes specification information that specifies an advertisement image,
said terminal includes an acquisition request transmission unit (21) transmitting an advertisement image acquisition request including said specification information to said server, and
said terminal receives, from said server, an advertisement image specified by the specification information included in the advertisement image acquisition request transmitted by said acquisition request transmission unit, and stores the received advertisement image into a storage unit.

5. The advertisement distribution system according to claim 4, wherein when the received advertisement image agrees with an advertisement image already stored in said storage unit, said terminal discards the received advertisement image.

6. An advertisement distribution server (100) distributing advertisement information to a terminal through a communication line, comprising:
an advertisement storage unit (102) for storing beforehand a plurality of advertisement information and information corresponding to each advertisement information that is related to a terminal as a distribution target of the advertisement information;
a reception unit (105) receiving, from said terminal, an advertisement request including the information related to the terminal; and
means for transmitting, to said terminal, the advertisement information in said advertisement storage unit corresponding to said information related to a terminal in the received advertisement request,
wherein said information related to a terminal indicates market information that designates a sales channel of the terminal.

7. The advertisement distribution server according to claim 6, wherein said market information corresponds to part of identification information of a user of said terminal.

8. A terminal (1) communicating with a server (100) distributing advertisement information through a communication line,
said server including
an advertisement storage unit (102) for storing beforehand a plurality of advertisement information and information corresponding to each advertisement information that is related to a terminal as a distribution target of the advertisement information,
said terminal including
an output unit (6) for outputting information received through said communication line,
an information accepting unit for accepting information related to the terminal,
an advertisement request unit (7) for transmitting an advertisement request including the information related to the terminal to said server, and
a reception unit receiving, from said server, the advertisement information in said advertisement storage unit that corresponds to the information related to the terminal in said advertisement request,
wherein said information related to the terminal indicates market information that designates a sales channel of the terminal.

9. The terminal according to claim 8, wherein said market information corresponds to part of identification information of a user of said terminal.

10. An advertisement distribution method for a terminal communicating with a server distributing advertisement information through a communication line, comprising:
in said terminal,
accepting information related to the terminal,
transmitting an advertisement request including the information related to the terminal to said server, and
outputting information received from said server through said communication line; and
in said server,
reading out, from an advertisement storage unit, said advertisement information corresponding to the information related to the terminal in said advertisement request received from said terminal and transmitting the read advertisement information to said terminal,
wherein said information related to the terminal indicates market information that designates a sales channel of the terminal.

11. The advertisement distribution method according to claim 10, wherein said market information corresponds to part of identification information of a user of said terminal.

12. A program for allowing a processor to execute the advertisement distribution method of claim 10.

13. A machine-readable recording medium having recorded the program of claim 12.
